# EUROPEAN PATENT SPECIFICATION

(11) **EP 3 980 770 B1**
(45) Date of publication and mention of the grant of the patent: **24.01.2024**
(21) Application number: 20743214.7
(22) Date of filing: 03.06.2020
(51) Int. Cl.: G01N 31/22, G01N 21/77, G01N 21/80

(54) **INDICATOR MATERIAL COMPRISING A POLYMERIC GEL CARRIER AND POLYMERIC INDICATOR**
INDIKATORMATERIAL MIT POLYMERGELTRÄGER UND POLYMERINDIKATOR
MATÉRIEL DE L'INDICATEUR COMPRENANT UN PORTEUR DE GEL POLYMÈRE ET UN INDICATEUR POLYMÈRE

(30) Priority: 04.06.2019 HU 1900197
(43) Date of publication of application: 13.04.2022
(73) Proprietor: MOOW.FARM KFT., 6728 Szeged (HU)
(72) Inventor: IVÁN, Béla, 1038 Budapest (HU); KASZA, György, 1084 Budapest (HU); LONTAY, Dávid Zoltán, 1036 Budapest (HU); MENYHÉRT, Balázs, 2241 Sülysáp (HU); NEURÓHR, Katalin, 1045 Budapest (HU); SÁRMEZEY, Bence András, 2117 Isaszeg (HU); SZABÓ, Ákos, 2241 Sülysáp (HU); SZARKA, Györgyi Éva, 3529 Miskolc (HU); SZÁZ, Dénes, 5000 Szolnok (HU); BÁNHEGYI, Péter, 1223 Budapest (HU); KERÉNYI, Péter, 1195 Budapest (HU); PUSKÁS, László, 6726 Szeged (HU)
(74) Representative: Danubia Patent & Law Office LLC
(86) International application number: PCT/HU2020/050022
(87) International publication number: WO 2020/245616

(56) References cited:
- WO-A1-2005/100981
- WO-A1-2014/043204
- WO-A2-2004/056311
- S. GOSWAMI ET AL: "Engineering properties of Novolac resin-PMMA{poly(methyl methacrylate)} IPN system", JOURNAL OF APPLIED POLYMER SCIENCE, vol. 93, no. 6, 15 September 2004 (2004-09-15), pages 2764-2774, XP055732833, US ISSN: 0021-8995, DOI: 10.1002/app.20673
- LI LIU ET AL: "A pH-Indicating Colorimetric Tough Hydrogel Patch towards Applications in a Substrate for Smart Wound Dressings", POLYMERS, vol. 9, no. 11, 26 October 2017 (2017-10-26), page 558, XP055676625, DOI: 10.3390/polym9110558
- LIN ET AL: "Studies on swelling behaviors, mechanical properties, network parameters and thermodynamic interaction of water sorption of 2-hydroxyethyl methacrylate/novolac epoxy vinyl ester resin copolymeric hydrogels", REACTIVE AND FUNCTIONAL POLYMERS, ELSEVIER, AMSTERDAM, NL, vol. 67, no. 9, 25 August 2007 (2007-08-25), pages 789-797, XP022213276, ISSN: 1381-5148, DOI: 10.1016/J.REACTFUNCTPOLYM.2006.12.010

## Description

### Field of the invention

The object of the invention is a polymeric indicator fixed in a polymeric gel carrier, which is suitable for measuring pH. Further objects of the invention are a process for the preparation of a polymeric indicator fixed in a polymeric gel carrier, a sensor comprising the indicator, and the use of the indicator and the sensor.

### State of the art

Polymer-based indicators operating on the principle of optochemistry, and sensors comprising them are known.

US 2009009768 discloses siloxane-based optochemical sensors in which the chromophore (an atomic group containing an easily excitable electron, involved in electron excitation) group (usually a phenolphthalein derivative) is deposited in a monolayer and fixed chemically on a cross-linked polysiloxane on a transparent support (e.g. glass). The measurement method is total reflection, i.e. multiple reflections are measured on the surface to be measured via a reflective/conductive medium. The sensor is suitable for use in extreme environments (high temperature and pressure), such as in wellbore wastewater. The measuring range is pKa±3.5 pH units, it is determined by the ratio of the peaks obtained at 440 and 575 nm.

US 5,774,603 discloses optochemical sensors comprising an indicator physically fixed on a support prepared by sol-gel method (Zr/Si glass). An example of an indicator dye is Nile blue, fluorescein. The goal was to produce a sensor operating over an extended pH range. The light guide to which the sensor layer was attached was silica glass. The sensor layer can also be applied onto an optical cable. The pH sensitive range is: 9.5-12.

EP 0 529 247 discloses pH-sensitive films with indicator dyes (phenol red and phenolphthalein derivatives) chemically bound to polymers made from vinylbenzene and acrylate derivatives.

WO 2016051217 discloses a sensor operating over a wide range, for measuring pH, comprising a 4-nitrophenol-formaldehyde condensation polymeric indicator [poly(4-nitrophenol-formaldehyde) indicator] bound to a preformed solid support.

WO 2009070722 discloses a pH sensitive hydrogel for maintaining the pH of cell cultures. Poly(ethylene glycol)-poly(propylene oxide) block copolymer and poly(ethyleneimine) - the use of which is not known for optochemical measurement of pH - are gelled with polyisocyanates. It is described that the physical introduction of pH-sensitive dyes into a cell culture or gel is suitable for non-invasive determination of the pH of the cell culture. Chemical binding of such indicators to a gel is not mentioned, example is not given for this; only the addition to the medium is mentioned.

S. Goswani et al. (J. Apl. Poly. Sci. 2004, (93) 2764) discloses a pH indicator based on an interpenetrating network (IPN) of a phenol-formaldehyde resin and poly(methyl methacrylate) (PMMA).

Certain types of Ocean Optics sensors (manufactured by Ocean Optics, 8060 Bryan Dairy Rd, Largo FL 33777, USA) operate on the principle of reflection, where the sensor layer is glued to the wall of the tank (usually bioreactors, fermentation reactors) containing the liquid to be measured, said sensors are illuminated from the outside for measurement.

The advantage of polymer-based indicators operating on the principle of optochemistry over conventional glass electrodes is that they are smaller in size, simpler in construction, and therefore can be produced in large quantities relatively easily and at low cost. It is characteristic of them that that they can be suitable for measuring pH for a long time with one calibration under suitable conditions. However, the disadvantage of the currently available sensors of this type is that their use is limited because they are stable only for a short time (Dorota W. et al.: Optical Chemical pH Sensors, Anal. Chem. 2014, 86, 15-29). Another disadvantage is the lower accuracy, as a suitable optical system is required to achieve adequate accuracy, which makes the application difficult and expensive. In addition, they can often only be used over a narrow pH range.

### The problem to be solved

The disadvantage of the known supported polymeric indicators is that the connection between the support and the polymeric indicator is unsatisfactory, so their stability is too short for continuous measurement over a long period, their accuracy is unsatisfactory, and their pH-sensitive range is narrow.

The objective of the invention is to provide a polymeric indicator with carrier and a sensor comprising it, which is suitable for continuously measuring pH with sufficient accuracy over a long period of time in a medium of either constant or variable pH, avoiding the above drawbacks.

More particularly, it is an objective of the present invention to provide a polymeric indicator with carrier suitable for measuring pH independently of environmental influences, with one calibration for up to 3 years, with an accuracy of 0.1 pH value, and a sensor comprising it.

It has been found that the above objective can be achieved with a polymeric indicator with carrier, wherein the polymeric indicator is built into the structure of the gel with chemical bonds by cross-linking it together with a defined hydrophilic polymer, i.e. the polymeric indicator and the hydrophilic polymer constitute the cross-linked network together.

### Brief description of the invention

The object of the invention is therefore a polymeric indicator fixed in a polymeric gel carrier, wherein the polymeric gel carrier comprises a hydrophilic polymer, wherein the polymeric indicator and the hydrophilic polymer are present together in the form of a combined cross-linked hydrogel network fixed by chemical bonds.

The polymeric indicator of the invention is defined in claim 1.

A further object of the invention is a process for the preparation of a polymeric indicator fixed in a polymeric gel carrier, comprising the steps of: dissolving the hydrophilic polymer or derivative thereof and the polymeric indicator independently of each other in a suitable solvent; combining the solutions, and, optionally in the presence of a coupling agent and optionally in the presence of a catalyst and optionally in the presence of a cross-linking point density enhancer, allowing to form the combined cross-linked hydrogel network.

The process for the preparation of a polymeric indicator of the present invention is defined in claims 11 and 12.

A further object of the invention is a sensor suitable for measuring pH, comprising the polymeric indicator fixed in a polymeric gel carrier.

The sensor of the present invention is defined in claim 13.

A further object of the invention is a use of the polymeric indicator fixed in a polymeric gel carrier for manufacturing a sensor suitable for measuring pH.

### Brief description of the drawings

Figure 1a. shows the UV-VIS transmission spectrum of poly(4-nitrophenol-formaldehyde) measured in buffers of different pH.
Figure 1b. shows the UV-VIS transmission spectrum of poly(2-nitrophenol-formaldehyde) measured in buffers of different pH.
Figure 1c. shows the UV-VIS transmission spectrum of poly(4-nitrophenol-co-4-hydroxybenzenesulphonamide-formaldehyde) measured in buffers of different pH.
Figure 1d. shows the UV-VIS transmission spectrum of poly(4-cyanophenol-formaldehyde) measured in buffers of different pH.
Figure 2a. shows the control measurement data of PIND sensor and PEG-PIND sensor at pH 5.
Figure 2b. shows the control measurement data of PIND sensor and PEG-PIND sensor at pH 8.
Figure 3 shows a block diagram of a pH-measuring device.
Figure 4 schematically shows the structure of an embodiment of the polymeric indicator fixed in a polymeric gel carrier according to the invention.

### Detailed description of the invention

As described above, the object of the invention is a polymeric indicator fixed in a polymeric gel carrier, wherein the polymeric gel carrier comprises a hydrophilic polymer, wherein the polymeric indicator and the hydrophilic polymer, connected with chemical bonds, form together a cross-linked network.

More particularly, the present invention relates to a polymeric indicator fixed in a polymeric gel carrier, wherein defined hydrophilic polymers are cross-linked together with various polymeric indicators. The polymeric indicator is present together with the hydrophilic polymer in the form of a homogeneous phase, wherein the polymeric indicator and the hydrophilic polymer form a chemically fixed combined hydrogel. The jointly formed cross-linked network provides homogeneity, as a result of which the polymeric indicator fixed in a polymeric gel carrier according to the invention shows sufficient transparency for measuring pH.

The hydrogel according to the invention can be transilluminated with visible or UV light and can thus be incorporated into a sensor suitable for measuring pH.

As used herein, "polymeric gel carrier polymeric indicator combination", "polymeric indicator fixed in a polymeric gel carrier", or "polymeric indicator with carrier" and similar expressions mean within the scope of the invention, a chemically bonded jointly formed cross-linked hydrogel, in other words a combined cross-linked hydrogel, formed jointly from a given hydrophilic polymer, which is also called a hydrophilic matrix, and a given polymeric indicator. The terms "carrier" and "hydrophilic polymer" or "hydrophilic matrix" are used interchangeably within the above interpretation.

As used herein, the term "polymeric gel carrier" within the scope of the invention refers to the component of the combination, which is not directly involved in the pH measurement although it plays an important role in the formation of the structure. This polymer component is not a support in a conventional sense, to the surface of which another component is attached, but forms a combined cross-linked network with the other component, i.e. it forms, together with the polymeric indicator, a cross-linked network structure, which swells and forms a gel in aqueous medium.

It is noted that although the polymeric carrier is not directly involved in the pH measurement, it is indirectly involved in the functioning of the indicator. On the one hand, the structure formed using the carrier polymer allows the hydrogen ions that determine the pH to reach the polymeric indicator in the gel. On the other hand, the gel created by the two components can be transilluminated to any degree, which is important for measurements based on the optical principle. This means that the polymeric carrier not only carries the indicator, not only provides physical stability, but also plays a role in the functioning of the polymeric indicator through the combined cross-linked network structure.

As used herein, the term "polymeric indicator" within the scope of the invention includes any substance which is composed of repeating chemical units and which exhibits different physical, physicochemical and/or chemical properties at different pH values, the transition between which properties depends on the different pH values.

As used herein, the terms "fixed by chemical bonds" or "chemically bonded" and the like refer to the type of bond between the polymeric indicator and the hydrophilic polymer within the scope of the invention. According to the invention, the chemical bond is a covalent bond.

As used herein, the term "suitable for measuring pH" within the scope of the invention means that the relevant polymeric indicator, polymeric indicator with carrier and/or sensor is capable of measuring and/or determining pH using any physical, physicochemical and/or chemical method. Examples of physical, physicochemical and/or chemical methods include methods based on the measurement of light absorption, including the absorption of visible or UV light, as well as methods based on the measurement of volume change and methods based on the measurement of pH-dependent electrical parameters.

The polymeric indicator with carrier according to the invention comprises any known polymeric indicator. Polymers of aromatic monomers linked by a bridging element are preferred.

According to one embodiment of the invention, the polymeric indicator is a polymer having a general structure of formula (I) or a salt, hydrate or solvate thereof 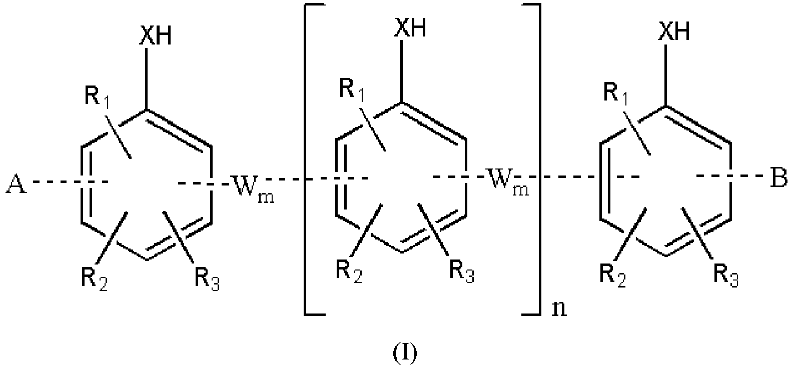 wherein
W is a bridging element connecting aromatic monomers, which may be a straight or branched alkandi-yl group optionally containing one or two oxo groups;
m has a value of 0 to 6;
X is oxygen, sulphur or N-Q, wherein N is nitrogen, and Q is H or C₁-C₄ alkyl;
R₁, R₂ and R₃ are, independently of each other, selected from the group of H, NO₂, SO₂NH₂, CN, SF₅, halogen, phenyl, benzyl, C₁-C₄ alkyl, C₂-C₄ alkenyl, C₂-C₄ alkynyl, C₁-C₄ alkoxy, C₁-C₄ acyl, nitrophenyldiazenyl and sulphophenyl-diazenyl;
n has a value of 1 to 1000;
A and B are, independently of each other, selected from the group of H, CH₂OH, CH₂O-(C₁-C₄ alkyl), CH₂-halogen, W-OH, W-O-(C₁-C₄ alkyl) and W-halogen.

In the definition of formula (I), halogen means fluorine, chlorine, bromine or iodine. C₁-C₄ alkyl means a saturated aliphatic hydrocarbon having 1 to 4 carbon atoms, such as methyl, ethyl, propyl, isopropyl or any butyl isomer. C₂-C₄ alkenyl means an unsaturated aliphatic hydrocarbon having 2 to 4 carbon atoms with one or more carbon-carbon double bonds, such as ethenyl, propenyl, isopropenyl or any butenyl isomer. C₂-C₄ alkynyl means an unsaturated aliphatic hydrocarbon having 2 to 4 carbon atoms with one or more carbon-carbon triple bonds, such as ethynyl, propynyl, isopropynyl or any butynyl isomer. C₁-C₄ alkoxy means a C₁-C₄ alkyl bonded via an oxygen atom, such as methoxy, ethoxy, propoxy, isopropoxy or any butoxy isomer. C₁-C₄ acyl is formyl or a saturated aliphatic hydrocarbon having 1 to 4 carbon atoms attached through a CO group, such as acetyl, propionyl, isopropionyl or any butyryl isomer.

W is preferably CH₂ (methylene), CH₂-CH₂ (ethylene), CH₃-CH (methyl-methylene) or CO (carbonyl) group.

The index m has a value of preferably 0 to 5, particularly preferably 0 or 1.

X is preferably oxygen or sulphur.

R₁, R₂ and R₃ are preferably independently of each other hydrogen, nitro, cyano, sulphonamide, methyl, (3-nitrophenyl)diazenyl, (4-nitrophenyl)diazenyl and (1-benzenesulphonic acid)-diazenyl groups.

A and B are preferably independently of each other H, CH₂OH, CH₂O-(C₁-C₄ alkyl), CH₂-halogen.

In formula (I), n has a value of preferably 20 to 500, more preferably 50 to 200.

In one embodiment of the invention, the aromatic monomers are identical.

In another embodiment of the invention, the aromatic monomers are different.

In a further embodiment of the invention the bridging element W connecting aromatic monomers is CH₂ (methylene), CH₂-CH₂ (ethylene), CH₃-CH (methyl-methylene) or CO (carbonyl) group, the aromatic monomer is selected from the group of 4-nitrophenol, 4-nitro-thiophenol, 2-nitrophenol, 4-cyanophenol, 4-hydroxybenzenesulphonamide, 3,5-dimethyl-4-nitrophenol, 4-pentafluorothio-phenol, 2-(4-hydroxy-benzylideneamine)-4-nitrophenol, 4-[(3-nitrophenyl)diazenyl]phenol, 4-[(4-nitrophenyl)diazenyl]phenol and [(4-hydroxyphenyl)diazenyl]benzenesulphonic acid. In a further embodiment of the invention the bridging element W connecting aromatic monomers is CH₂ (methylene) or CH₃-CH (methyl-methylene) group, and the polymer comprises at least two different monomers.

In a further embodiment of the invention the bridging element W connecting aromatic monomers is CH₂ (methylene) or CH₃-CH (methyl-methylene) group, and at least one of the monomers is selected from the group of 4-nitrophenol, 4-nitro-thiophenol, 2-nitrophenol, 4-cyanophenol, 4-hydroxybenzenesulphonamide, 3,5-dimethyl-4-nitrophenol, 4-pentafluorothio-phenol, 2-(4-hydroxy-benzylideneamine)-4-nitrophenol, 4-[(3-nitrophenyl)diazenyl]phenol, 4-[(4-nitrophenyl)diazenyl]phenol and 4-(4-hydroxyphenyl)-diazenyl]benzenesulphonic acid.

In a further embodiment of the invention the bridging element W connecting aromatic monomers is CH₂ (methylene) or CH₃-CH (methyl-methylene) group, and at least one of the monomers 4-nitrophenol.

In another embodiment of the invention the index m has a value of 0 to 5.

In a further embodiment of the invention the index m has a value of 0 or 1.

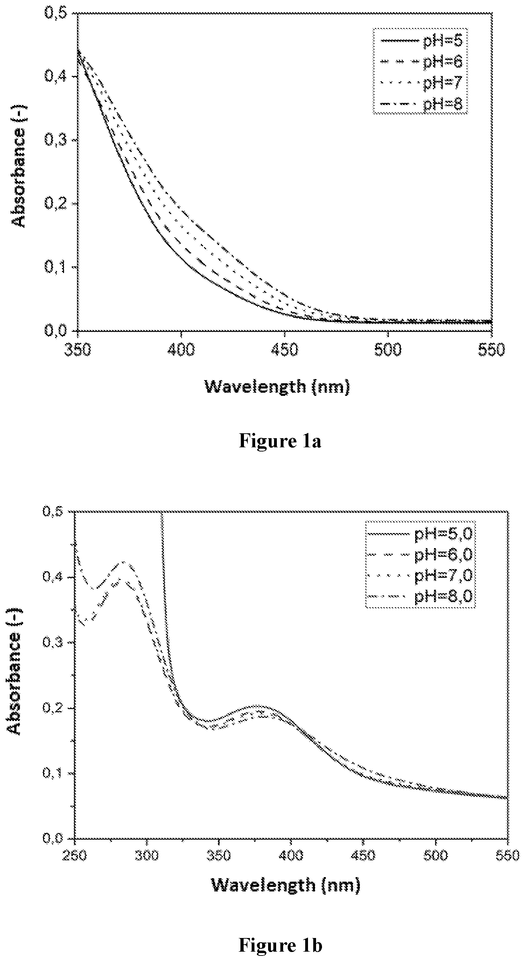

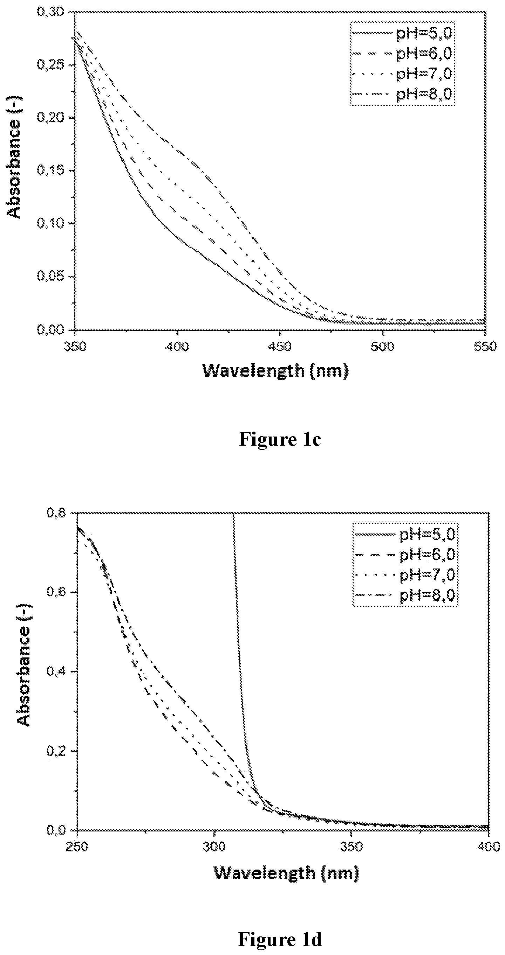

In a further embodiment of the invention the polymeric indicator is selected from the group of poly(4-nitrophenol-formaldehyde), poly(2-nitrophenol-formaldehyde), poly(4-nitrophenol-co-4-cyano-phenol-formaldehyde), poly(4-nitrophenol-co-4-hydroxybenzenesulphonamide-formaldehyde), poly(3,5-dimethyl-4-nitrophenol-formaldehyde), poly[2-(4-hydroxy-benzylideneamine)-4-nitrophenol], poly{4-[(3-nitrophenyl)diazenyl]-phenol}, poly {4-[(3-nitrophenyl)diazenyl]phenol-formaldehyde}, poly { 4-[(4-nitrophenyl)-diazenyl]phenol}, poly { 4-[(4-nitrophenyl)diazenyl]phenol-formaldehyde}, poly{4-[(4-hydroxyphenyl)diazenyl]benzenesulphonic acid}, poly { 4-[(4-hydroxyphenyl)diazenyl]-benzenesulphonic acid-formaldehyde} and the like (for some of them, the UV-VIS transmission spectrum is shown in Figures 1a-d).

In a further embodiment of the invention the polymeric indicator is selected from the group of poly(4-nitrophenol-formaldehyde), poly[2-(4-hydroxy-benzylideneamine)-4-nitrophenol], poly { 4-[(3-nitrophenyl)diazenyl]phenol-formaldehyde}, poly{4-[(4-nitrophenyl)diazenyl]phenol-formaldehyde}, poly{4-[4-hydroxyphenyl)diazenyl]-benzenesulphonic acid-formaldehyde}.

In a further embodiment of the invention the polymeric indicator is used in the form of a salt, hydrate or solvate. The salt of the polymeric indicator is generally an alkali metal, alkaline earth metal, ammonium or primary, secondary or tertiary amine salt, preferably a sodium salt. Salts of the polymeric indicator also include anionic salts such as halides, nitrates, sulphates, hydrogen sulphates, phosphates, oxalates, maleates. The hydrate and the solvate generally contain 0.5 to 5 moles, preferably 1 to 3 moles of water or solvent per mole of polymer. The solvent in the solvate is generally alcohol, ether, *N,N-*dimethylformamide, preferably alcohol. The preparation of salts, hydrates and solvates is generally carried out in the usual manner. The salts are preferably prepared by reacting the polymeric indicator with an alkali metal hydroxide or other salt-forming compound. The hydrates are preferably prepared by treating, precipitating or evaporating the polymeric indicator with/from water. The solvates are preferably prepared as described for the preparation of the hydrates, except that the appropriate solvent is used instead of water.

Certain polymeric indicators used in the present invention are generally known and are commercially available and/or can be prepared by known methods. For example, poly(4-nitrophenol-formaldehyde) is known from WO 2016051217, poly[2-(4-hydroxybenzylideneamine)-4-nitrophenol] is known from M. Yildirim, A. Aydin, and I. Kaya, "Syntheses and pH sensing applications of imine-coupled phenol and polyphenol species derived from 2-amino-4-nitrophenol," J. Fluoresc., vol. 22, no. 3, pp. 961-970, 2012. Indicators not mentioned above are not commercially available, they were produced by us under laboratory conditions.

In one embodiment of the invention, the aromatic monomer and the aldehyde for connecting the aromatic monomers are polymerised in the presence of a base or acid with stirring and at an elevated temperature to produce the polymeric indicator, wherein the molar ratio of the aromatic monomer to aldehyde monomer is generally from 1:2 to 2:1, preferably 1: 1. After processing, purification and optionally drying in the usual manner, the polymeric indicator obtained as a product can be incorporated directly into the polymeric gel carrier.

As polymeric gel carrier (also called hydrophilic polymer or hydrophilic matrix) a water-soluble and/or water-swellable polymer is used. As hydrophilic polymer, polyglycidol, such as hyperbranched polyglycidol or linear polyglycidol, furthermore poly(ethylene glycol) and derivatives of poly(ethylene glycol), poly(vinyl alcohol), poly(A-vinylpyrrolidone), poly(N-vinylimidazole), poly(acrylamide) and derivatives of poly(acrylamide), more particularly poly(hydroxyethyl acrylamide), poly(acrylic acid) and derivatives of poly(acrylic acid), more particularly poly(hydroxyethyl acrylate), poly(methacrylic acid) and derivatives of poly(methacrylic acid), more particularly poly(hydroxyethyl methacrylate), linear poly(ethyleneimine) or hyperbranched poly(ethyleneimine), poly(methyl vinyl ether), poly(methyl oxazoline), poly(ethyl oxazoline) and poly(isopropyl oxazoline), and their derivatives with various isocyanates, especially with 1,6-hexamethylene diisocyanate, isophorone diisocyanate, 2,4-toluene diisocyanate, 1,1'-methylene-bis(4-phenylisocyanate), 1,3,5-tris(6-isocyanatohexyl)-1,3,5-triazinane-2,4,6-trione, and the like, can preferably be used.

When an isocyanate derivative is used, it is involved in the formation of the chemical bond. In particular, the isocyanate derivative of the hydrophilic polymer, in addition to being a component of the formation of the combined hydrogel, also functions as a coupling agent through the isocyanate group. During the formation of the combined hydrogel, the isocyanate group reacts with the hydroxyl functional group to form a urethane linking group.

In a further embodiment of the invention, the polymeric gel carrier is selected from the group of polyglycidol, poly(ethylene glycol) and poly(vinyl alcohol).

The hydrophilic matrices of the polymeric gel used according to the invention are generally known and can be obtained commercially and/or prepared by known methods. For example, poly(ethylene glycol) (Sigma Aldrich, TCI etc.), polyglycidol (DOI: 10.1039/C6RA27843D (Communication) RSC Adv., 2017, 7, 4348-4352), poly(vinyl alcohol) (Sigma Aldrich, TCI etc.), poly(hydroxyethyl methacrylate) (Sigma Aldrich) are commercially available.

In the case of the polymeric indicator fixed in a carrier according to the invention, the amount of the polymeric indicator is generally 0.01 to 2 times the weight, preferably 0.05 to 1.5 times the weight of the hydrophilic matrix of the polymeric gel.

As mentioned above, in the case of the polymeric indicator fixed in a carrier according to the invention, the polymeric gel carrier comprises a hydrophilic polymer, wherein the polymeric indicator and a hydrophilic polymer are present together in the form of a combined cross-linked hydrogel network fixed by chemical bonds. The combined cross-linked hydrogel network formed by the polymeric indicator and the hydrophilic polymer can occur in the form of a physical structure of any appearance.

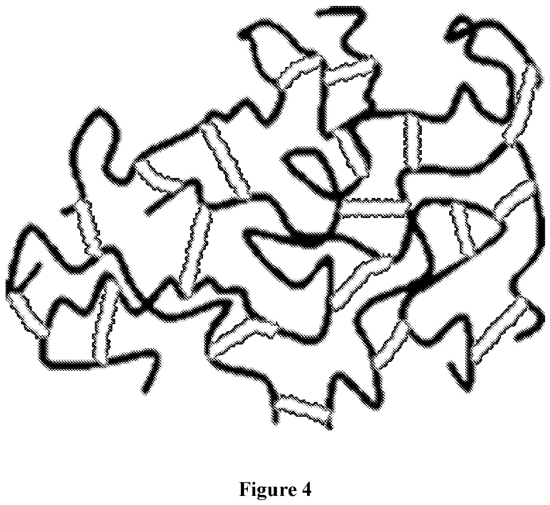

In one embodiment of the invention, covalent bonds are present as a chemical bond between the polymeric indicator and the hydrophilic polymer. One embodiment of the combined cross-linked hydrogel network is shown in Figure 4, where the unfilled lines show the chains of the polymeric indicator and the solid lines show the chains of the hydrophilic polymer.

The polymeric indicator fixed in a carrier according to the invention is prepared by cross-linking, wherein the polymeric indicator is cross-linked with a hydrophilic polymer or a derivative thereof, optionally in the presence of a coupling agent. In the resulting product, the hydrophilic polymer and the polymeric indicator form the cross-linked network together, so that the polymeric indicator is chemically fixed in the cross-linked network, constituting an integral part thereof.

To prepare the polymeric indicator fixed in a carrier according to the invention, the hydrophilic polymer or its derivative and the polymeric indicator are dissolved independently of each other in a suitable solvent. As suitable solvents anhydrous organic solvents, in particular *N*,*N*-dimethylformamide, dimethyl sulphoxide, dimethylacetamide, diethylene glycol dimethyl ether, ethylene glycol dimethyl ether, N-methyl-2-pyrrolidone and the like, or a mixture of one or more of said solvents can preferably be used.

Optionally, the hydrophilic polymer or derivative thereof and/or the polymeric indicator are dried before being dissolved in a suitable solvent. The drying is generally carried out at a temperature of 60 to 120 °C, in particular 60 to 80 °C, generally for 12 to 48 hours, in particular 24 to 36 hours. The drying is particularly preferably carried out under vacuum.

The concentration of the solution obtained, both in case of the polymeric gel carrier and the polymeric indicator, is generally from 10 to 40% by weight, preferably from 35 to 40% by weight, and in the case of a poly(vinyl alcohol) carrier from 10 to 20% by weight. The concentration of the polymeric gel carrier and the polymeric indicator solution may be the same or different.

The resulting solutions are then combined and, in order to form the cross-linked hydrogel network, optionally additives, preferably a coupling agent, a catalyst, a cross-linking point density enhancer and the like, are added to the mixture.

The coupling agent preferably has 2 to 4 functional groups, particularly preferably 2 to 3 functional groups, the ratio of the number of functional groups of the coupling agent to the number of functional groups of the polymeric indicator in the case of a hydrophilic polymer also acting as a coupling agent, or to the combined number of functional groups of the hydrophilic polymer and the polymeric indicator in the case of using a separate coupling agent, (hereinafter: functional group ratio) is preferably 0.2-0.9: 1, particularly preferably 0.6-0.8: 1. If the functional group ratio of the coupling agent to the combined number of functional groups of the hydrophilic polymer and polymeric indicator is 1: 1 or more, the indicator function of the polymeric indicator ceases in the absence of the functional groups.

Examples of applicable coupling agents are diisocyanate, in particular 1,6-hexamethylene diisocyanate (HDI), isophorone diisocyanate (IDI), 2,4-toluene diisocyanate (TDI), methylene diphenyl diisocyanate (MDI) and the like, and dialdehydes, in particular glutaraldehyde (GDA) and the like.

The choice of the appropriate coupling agent is important for the optical properties of the resulting hydrogel, such as transparency. In one embodiment of the invention, in the case of poly(ethylene glycol), diisocyanate is used as the coupling agent. As mentioned above, in a preferred embodiment of the invention, in the case of poly(ethylene glycol), the coupling agent (crosslinking agent) is the hydrophilic polymer carrier containing an isocyanate group itself. In another embodiment of the invention, in the case of polyglycidol, HDI is used as the coupling agent. According to a preferred embodiment of the invention, in the case of polyglycidol, HDI is used as coupling agent and the amount of catalyst is 10-50%, based on the functional group content of the polymeric indicator. In another embodiment of the invention, in the case of poly(vinyl alcohol), GDA is used as the coupling agent.

Polymeric gel carriers bearing an isocyanate group, such as poly(ethylene glycol)-isocyanate and the like, also act as coupling agents on their own, therefore, the polymeric indicator fixed in a carrier can optionally be produced without the addition of an additional coupling agent, but it is also possible to add an additional coupling agent. The poly(ethylene glycol) isocyanate may contain 2 to 10 isocyanate groups, preferably 2 to 6, particularly preferably 2 to 4 isocyanate groups.

The poly(ethylene glycol)-isocyanate can be prepared by reacting poly(ethylene glycol) diol and diisocyanate. Various diisocyanates can be used for the reaction, such as 1,6-hexamethylene diisocyanate (HDI), isophorone diisocyanate (IDI), 2,4-toluene diisocyanate (TDI), methylene diphenyl diisocyanate (MDI) and the like, preferably 1,6-hexamethylene diisocyanate (HDI), isophorone diisocyanate (IDI), particularly preferably 1,6-hexamethylene diisocyanate (HDI). The reaction is started from a solution of dry poly(ethylene glycol) diol. The concentration of the polymer in the solution is 5 to 35% by weight, preferably 30 to 35% by weight. Organic solvents which dissolve poly(ethylene glycol) well and which do not react with isocyanates, have a boiling point higher than 100 °C and mix with the precipitant can be used as solvents. Examples of suitable solvents are dioxane, pyridine, preferably toluene. In the case of liquid diisocyanate, this is mixed with the solvent of the polymer, wherein the amount of solvent is 0.25 to 10 by volume ratio, preferably 0.25 to 2, particularly preferably 0.25 to 1 by volume ratio, relative to the diisocyanate. In the case of solid diisocyanate, a solution of 5 to 40% by weight, preferably 10 to 25% by weight is prepared from it. The amount of diisocyanate is from 4 to 30 mol, preferably from 20 to 30 mol, particularly preferably from 25 to 30 mol, relative to 1 mol of poly(ethylene glycol) diol. The polymer solution is added dropwise to the solution containing diisocyanate, preferably over 1 to 2 hours, particularly preferably over 1.5 to 2 hours, with vigorous stirring. The temperature during the dropwise addition is maintained in the range of 90 to 110 °C, preferably in the range of 100 to 105 °C. The reaction is optionally carried out in the presence of a catalyst. Catalysts used in the formation of urethanes, such as tertiary amines, in particular triethylamine, diethylenediamine (DABCO), dimethylcyclohexylamine, dimethylethanolamine, dimethylpiperazine and the like, organometallic compounds, in particular dibutyltin dilaurate, tin-2-ethylhexanoate and the like may be preferably used. After dropwise addition, the mixture is allowed to cool to room temperature with stirring. Stirring is continued for 0.5 to 1, preferably 0.75 to 1 hours after the addition of the polymer solution. From the mixture thus obtained, the product is precipitated in a 6 to 12-fold volume, preferably 8 to 10-fold volume of precipitating agent at room temperature by dropwise addition of the mixture with stirring. An organic solvent which does not dissolve poly(ethylene glycol), does not react with the product, and is miscible with the solvent used in the synthesis can be used as a precipitant. Preferred solvents are, for example, liquid paraffins (pentane, hexane, heptane, octane and their normal, branched and cyclic isomers, mixtures thereof, cyclohexane and the like), dialkyl ethers, in particular hexane and diethyl ether. The precipitated product is allowed to stand with the precipitant in a refrigerator at 4 °C for 12 to 24 hours, preferably for 18 to 24 hours, and then the liquid is decanted from the product. The purification by precipitation is repeated 2 to 4 times, preferably 2 to 3 times. The pure product is dried in a clean area under vacuum and at a temperature of 20 to 40 °C, preferably 20 to 30 °C for 4 to 12 hours, preferably for 6 to 12 hours. The dry product is stored in a freezer at -20 to -15 °C under an inert atmosphere until use and is used within a maximum of 6 to 8 weeks.

In the synthesis of the hydrogel suitable catalysts include tertiary amines and organometallic compounds such as triethylamine, triethylenediamine, dimethylcyclohexylamine, dimethylethanolamine, dimethylpiperazine, dibutyltin dilaurate, tin-2-ethylhexanoate and the like. In the case of poly(vinyl alcohol), an acid catalyst may be used with glutaraldehyde coupling agent, such as hydrochloric acid.

The amount of catalyst is generally 50 to 100%, preferably 70 to 80% for poly(ethylene glycol) hydrophilic polymer, and 10 to 50%, preferably 10 to 35% for polyglycidol hydrophilic polymer, based on the functional group content of the polymeric indicator. In the case of a poly(vinyl alcohol) hydrophilic polymer, the amount of the hydrochloric acid catalyst is from 10⁻⁵ to 10⁻¹ mol, preferably from 10⁻³ to 5×10⁻³ mol HCl/mg poly(vinyl alcohol).

As cross-linking point density enhancer any sugar alcohol such as pentaerythritol, glycerol, erythritol, sorbitol, mannitol and the like, as well as polyvalent and/or primary amines such as pentylamine, ethylenediamine, 1,4-diaminobutane and the like can be used. Preferably, a cross-linking point density enhancer that is soluble in the particular solvent is used.

The cross-linking point density enhancer preferably has 2 to 6 functional groups, particularly preferably 2 to 4 functional groups, the ratio of the number of functional groups of the cross-linking point density enhancer to the number of the functional groups of the polymeric indicator is preferably 0-9:1, particularly preferably 0.1-1: 1.

The coupling agent and, optionally, additional additives are added to the combined polymer solutions and then homogenised (e.g., shaken for 1 minute). The hydrogel is prepared at an elevated temperature, generally at a temperature between 50 and 100 °C, especially between 60 and 80 °C, generally for 24 to 72 hours, especially 48 hours.

The hydrogel is optionally washed with *N,N*-dimethylformamide or dimethyl sulphoxide to remove unreacted materials and the catalyst, and then with an aqueous mixture of said solvents until the solution is no longer coloured. The washing can be carried out using continuous extraction methods such as Soxhlet extraction, using in particular acetonitrile, acetone or the like as solvent. Continuous extraction processes advantageously shorten the washing time.

In one embodiment of the invention, the polymeric indicator and the coupling agent are dissolved in a suitable solvent such as *N,N*-dimethylformamide. Separately, the polymeric gel carrier is also dissolved in a suitable solvent such as *N,N-*dimethylformamide. The solutions are preferably prepared in a sealable glass vessel or a Teflon vessel. Optionally, the catalyst and any cross-linking point density enhancer are added to the solution of the polymeric indicator, and the solutions are combined and heated in a heating medium at 80 °C for 48 hours. The resulting gel is washed with a suitable solvent, preferably with *N,N*-dimethylformamide twice, and then with a *N,N-*dimethylformamide/water mixtures with a water content increased gradually, preferably by 25% by volume per steps (changing the solvent/solvent mixture in each case) and finally with pure water. The washing is generally carried out in 4 to 8 steps, preferably in 5 to 6 steps. Generally, 1 to 5 steps, preferably 1 step, are performed per week, during which the solvents/solvent mixtures are changed every 3 to 7 days, preferably every 7 days. The complete washing usually takes 5 to 6 weeks.

According to one embodiment of the invention, the washing is carried out by using Soxhlet extraction with a suitable solvent, preferably in the presence of acetonitrile solvent, the extraction is continued for 2-3 days, preferably for 2 days, then washing is continued with a suitable solvent, preferably with *N,N*-dimethylformamide once and then with a *N,N-*dimethylformamide/water mixture with a water content increased gradually, preferably by 25% by volume per steps (changing the solvent/solvent mixture in each case) and finally with pure water. The washing is generally carried out in 4 to 8 steps, preferably in 5 to 6 steps. Generally, 1 to 7 steps, preferably 3 to 7 steps are performed per week, during which the solvents/solvent mixtures are changed every 1 to 2 days, preferably every 2 days. The complete washing usually takes 1 to 2 weeks.

In the case of the polymeric indicator fixed in a carrier according to the invention, the physical state of the hydrogel, in particular the density of the cross-linking points, is characterised by the gel fraction. The gel fraction is the ratio of the dry weight of the cross-linked network to the weight of the starting materials, expressed as a percentage. The gel fraction of the polymeric indicator fixed in a carrier according to the invention is generally from 10 to 95%, preferably from 50 to 95%, in particular from 75 to 95%.

The gel fraction is measured in the usual way. In a preferred embodiment, the resulting gel is extracted at least twice in the suitable solvent used for the washing, such as *N,N-*dimethylformamide, dimethyl sulphoxide, and then in aqueous mixtures of the solvent used, as described in connection with the washing. After extraction, the solvent is evaporated off and the residue is weighed after drying. The gel fraction is obtained by subtracting from 100% the quotient of the extracted dry matter and the total weight of the starting materials involved in the gel synthesis, the result being expre as a percentage. The extraction can also be performed by Soxhlet extraction with a suitable solvent or solvent mixture such as acetonitrile, acetone and *N,N-*dimethylformamide/water mixture.

The polymeric indicator fixed in a carrier according to the invention can be incorporated in a sensor for measuring pH. The sensor can be of any type, preferably a sensor based on the measurement of light absorption, a sensor based on the measurement of volume change or a sensor based on the measurement of pH-dependent electrical parameters. The manufacture of the sensor is generally carried out in the usual manner.

In one embodiment of the invention, a light source, the polymeric indicator fixed in a polymeric gel carrier, and a detector are arranged along a straight line in this order.

According to one embodiment of the invention, the sensor is a sensor operating on the principle of light absorption measurement. In this case, the polymeric indicator is illuminated with a focused light source, such as an LED light source, wherein the light passes through the sample. During transmission, the polymeric indicator absorbs some of the light passing through it according to its absorption spectrum, which is measured on the other side of the sample with a detector suited to the light source and the absorption properties of the sample. The optical units mentioned below are non-limiting examples that allow for the advantageous operation of the sensor. The light beam can preferably be focused and controlled by collimator lenses. A broad spectrum LED can be used as a light source, with a preferred wavelength range of 380-700 nm and a preferred correlated colour temperature (CCT) of 3500 to 6500 K. A particularly preferred colour temperature range is the 6000 to 6500 K range, which is characteristic of cold white LED light sources. In this case, the relative intensities between 450 and 500 nm that are characteristic of the spectral intensity distribution of LED light sources are sufficiently high, especially in the range where, for example, the change in absorption of the poly(4-nitrophenol-formaldehyde) polymeric indicator is the largest (430 to 510 nm). Incandescent or flash lamps can be used as alternative light sources, but their significant disadvantage compared to LED light sources is their much higher consumption and heating. By knowing the wavelength range with the largest change in absorption, it is particularly advantageous to use a narrow-spectrum LED light source with a radiation spectrum in this range, which is 430 to 510 nm for the poly(4-nitrophenol-formaldehyde) polymeric indicator. Instead of an LED light source, a laser in this wavelength range can also be used. In this case, the precondition of use is that it has an appropriate power density so that it does not cause damage to the polymeric indicator material.

Measurement of the absorption and its change due to pH change can be performed with a detector located on the side of the light path behind the sample. Several types of detectors are suitable for this. In the case of a broad-spectrum light source, the use of a spectrometer is most appropriate. Here, an optical grating or prism resolves the light entering the spectrometer according to the wavelength, and then the intensity of each wavelength is measured by the detector, giving the absorption spectrum of the sample (e.g., Ocean Optics STS-VIS spectrometer). In the case of narrow-spectrum light sources, the use of specific detectors is more appropriate. Examples of such detectors are photodiodes, photoresistors, phototransistors. The operation of the photodiode is ensured by the photoeffect. Under the effect of light falling on the diode material electrons exit the material, creating a photocurrent. The magnitude of the photocurrent is proportional to the intensity of the light falling on it having a wavelength corresponding to the sensitivity range of the photodiode. In the case of photoresistors, the electrical resistance of the detector material decreases due to the light falling on the detector. Photoresistors are made of materials with very strong photoelectric properties (e.g. cadmium sulphide, lead sulphide). The magnitude of the decrease in electrical resistance is intensity- and wavelength-dependent. The internal photoelectric phenomenon of phototransistors is the same as that described for a photodiode. The light beam reaches the emitter-base transition region acting as a photodiode, through which a photocurrent is triggered as a result. This photocurrent is amplified by the transistor, so that the collector current is generated from the amplified photocurrent. Phototransistors are significantly more sensitive than photodiodes because they are more sensitive to even small changes in the amount of illumination. For each detector type, it is important that the sensitivity range of the detector be chosen to match the radiation spectrum of the light source.

The pH measurement based on the measurement of light absorption is preferably carried out by recording the reference spectrum of the light source and then placing the polymeric indicator in buffer solutions of known pH. After equilibrium is reached, the transmission spectrum of the indicator is measured, which can be transformed on the basis of the mathematical relationship A = - Ig (I/I₀) (absorbance is the negative decimal logarithm of the transmittance), thus the absorption spectrum for the polymeric indicator at the given pH is determined. The absorption spectra are recorded at different values, preferably pH 5, 6, 7, 8. Equilibrium state is allowed to be reached between each measurement. The thus obtained series of measurements is repeated several times and the mean and standard deviation of the absorbance values measured at each pH are determined for the given wavelength (e.g., 480 nm). The relationship between absorbance and pH is described in the Henderson-Hasselbalch equation (Lawrence J. Henderson (1908). "Concerning the relationship between the strength of acids and their capacity to preserve neutrality." Am. J. Physiol. 21: 173-179). By fitting this function to the absorbance averages measured at different pH values, by determining the fitting parameters and their relative error, a relationship is obtained, by which the pH value can be determined from any absorbance value. The accuracy of the pH measurement is determined on the basis of Gaussian law of error propagation, which is a standard method in error calculation, with which the pH can been determined with a value of uncertainty of 0.1 to 0.3 for different polymeric indicators. By optimizing the parameters of the indicator, the error of the pH measurement can be reduced below 0.1.

The technical precondition for the pH-dependent detectability of absorbance is that the change in the intensity of light passing through the polymer gel as a result of 1 unit change in pH is at least 1 to 3%, preferably greater than 5%. It is particularly preferred if this change is at least 7 to 10%. Absorbance is also influenced by the homogeneity of the sample. The more homogeneous the sample, the higher the initial light transmittance, i.e. the ratio of the transmitted light intensity measured at the lowest pH to be employed to the intensity of the light source. In the case of a sample with low homogeneity, smaller changes in the intensity of the light passing through the gel sample are observed as a result of the change in pH, which makes the detectability difficult (Example 19). Therefore, it is preferred to use high-homogeneity polymer gel samples having the highest initial light transmittance.

In a preferred implementation of the above measurement principle, the light source and the absorption sensor are located on a separate printed circuit board (PCB), between which the polymeric indicator fixed in a carrier is located. This is set up so that the indicator gel can come into contact with the medium to be measured through a window, but the light source, detector and other electronic components are isolated from the medium to be measured in order to protect them. The light source is an LED operating in a narrow wavelength range, the dominant wavelength of which is preferably in the range of 470 to 480 nm. The detector is a sensor suitable for measuring absorption, which is an electronic unit consisting of a photodiode, an amplifier and an AD converter located on a separate printed circuit. Both PCBs include a temperature sensor, which is preferably an NTC sensor. The latter is used for continuous temperature measurement, based on which temperature correction can be performed during software evaluation of the sensor data. A third printed circuit includes electronic components for controlling the former, which are communication interfaces and a microcontroller. The microcontroller runs the software implementing the measurement protocol, which is preferably, but not exclusively, performed by the following steps: (1) switching on the LED, (2) starting the measurement with the light sensor, (3) stopping the measurement after a certain time, (4) switching off the LED, (5) transmitting data to a processing unit (e.g., a computer), (6) repeating steps (1) to (5) at predetermined intervals. The processing of the data, i.e. the calculation of the pH value based on the measured absorption intensity values, is preferably done on a computer, alternatively the microcontroller can perform this calculation, but then the microcontroller has to perform several operations, thus increasing the measurement time.

In another embodiment of the invention, the sensor is a sensor based on measuring volume change. In this case, the swelling of a gel is measured. To this end, the polymeric indicator with carrier according to the invention is filled into a support structure that is open on two opposite sides, wherein pressure-measuring sensors are arranged on two closed sides of the support structure. The volume of the polymeric indicator with carrier varies depending on the pH to be measured due to changes in the gel structure. The pressure exerted on the pressure sensors increases in proportion to the swelling, which causes a change in the pressure measured by the sensors. With proper calibration, the change in pH can be determined from the change in pressure. Another possible way to measure the change in volume is to take advantage of changes in the relative dielectric constant of the material as the volume of the polymeric indicator changes. To measure this, the polymeric indicator is arranged between two insulated metal plates forming the armatures of a capacitor. The voltage between the armatures varies depending on the dielectric constant of the polymeric indicator with carrier as well as the distance between the armatures, which vary depending on the volume of the gel. After proper calibration, this method can also be used to create a sensor that is suitable for measuring pH. Volume change can also be measured by piezoelectric measurement. In the case of piezoelectric materials, an electrical voltage can be measured due to mechanical deformation. By placing piezoelectric sensors on the gel, its change in volume causes mechanical deformation in the piezoelectric sensor, so that even a slight change can be detected.

In another embodiment of the invention, the sensor is a sensor based on the measurement of pH-dependent electrical parameters. The electrical resistance and capacity of the gel change with pH. A permanent-magnet quotient meter is excellent for measuring this resistance in direct current. In the measurement, two resistors are always compared, one being a resistor of well-known value and the other a resistor of unknown value. During the measurement, the value of the two resistances must be in the same order of magnitude. A Schering bridge with a variable frequency signal generator and oscilloscope can be used to measure the change in capacitance of the gel.

Therefore, a further object of the invention is sensor for measuring pH, which comprises the polymeric indicator according to the invention fixed in a polymeric gel carrier.

The sensor according to the invention is suitable for measuring pH. The pH can be measured with the sensor according to the invention by any known method for measuring pH. Methods for measuring pH are based on determining the extent of a physical and/or chemical change. Examples of physical and/or chemical changes include optical changes, i.e. changes in the colour of the polymeric indicator; change in swelling, i.e. change in gel volume; the electrical change, i.e. the change in the dielectric constant of the gel; and piezoelectric measurement.

When measuring the optical change, the change in the colour of the indicator, caused by the pH value to be determined, is measured for example by organoleptic or instrumental, such as spectrophotometric detection.

To adjust the accuracy of the pH measurement, the sensor is calibrated by measuring buffers of known pH. In doing so, the relationship between the pH value to be measured and the measured signal (calibration line, curve, function) is determined, which is preferably plotted as a graph. The unknown pH of the sample to be measured is read from the graph on the basis of the measured signal.

The sensor comprising the polymeric indicator fixed in a carrier according to the invention can be generally used to determine the pH of various samples. It is particularly advantageous for the continuous and long-term measurement of samples with constant or variable pH. Continuous and long-term measurements are performed in particular without intermediate calibration, i.e. without repeating the pre-calibration. The duration of continuous measurement can be up to three years. The duration of a continuous measurement with one calibration is at least six months, preferably at least one year, in particular at least three years.

In addition, the sensor comprising the polymeric indicator fixed in a carrier according to the invention is suitable for measuring pH over a wide range. The measurable pH range is generally 2 to 12, especially 4 to 10.

The invention is further demonstrated by the following examples, without limiting the claims to the examples.

### Example 1. Preparation of the polymeric indicator (general process)

A homogeneous mixture of 12.50 mmol of para-substituted phenol derivative and 18.50 mmol of the corresponding aldehyde (paraformaldehyde or formalin) and 1.75 mL of distilled water was heated to 130 °C and a solution of 150 mg (3.75 mmol) of sodium hydroxide in 375 µl of water was added dropwise. The mixture was kept at this temperature with stirring for 24 hours. The product cooled to room temperature was dissolved in 10-15 ml of tetrahydrofuran or other organic solvent in which the product was soluble and miscible with water, and the solution was added dropwise to 100-150 ml of 0.1 M hydrochloric acid with vigorous stirring, then it was stored overnight at +4 °C, finally, the precipitated product was filtered off or the liquid was decanted from it. If necessary, the product was repeatedly dissolved and precipitated. The product was dried under vacuum at 60 °C for 24 hours.

### Example 2. Preparation of poly(4-nitrophenol-formaldehyde) polymeric indicator

25 mmol of 4-nitrophenol and paraformaldehyde corresponding to 37 mmol of formaldehyde were weighed into a 50 (or 100) ml multi-necked round bottom flask. A magnetic stirring bar was introduced into the flask, a heating medium (oil bath, aluminium heating block) and a magnetic stirring heater were placed underneath. The temperature was measured with a thermometer or thermocouple capable of measuring a temperature range of at least 0-200 °C. A ball reflux condenser was placed in one of the ground-necks of the round-bottomed flask and the thermometer in the other.

Stirring and water-cooling were started, and the heating medium was heated to 130 °C. If formalin was used, it was added dropwise after the melting of 4-nitrophenol. When the reaction mixture reached 90 °C, 0.75 ml of a 0.4 g/ml NaOH solution was added dropwise as a catalyst (in the case of paraformaldehyde, otherwise 5 minutes after the addition of formalin), then the reaction was continued for 24 hours. Due to the reflux of water that was present, the temperature of the reaction mixture was about 100 °C. The reaction mixture was initially yellow, turned orange with the addition of NaOH, and towards the end of the synthesis, it thickened and darkened. After completion of the reaction, the reaction mixture was allowed to cool to room temperature, and then 20-25 ml of tetrahydrofuran was added. The dissolved product was precipitated by adding it dropwise to 0.1 M hydrochloric acid of an amount 8 to 10 times the amount of THF while stirring and allowed to stand in a refrigerator for at least 10 hours. The liquid was decanted from the precipitated product, and if the product did not settle completely, the poured liquid was centrifuged at 5000 rpm for 30 minutes, and then the aqueous phase was poured off. The product was redissolved in 20-25 mL of THF and precipitated in 0.1 M hydrochloric acid. The purified product was dried at 60 °C under vacuum for 24 hours. The colour of the product obtained was yellow-orange.

### Example 3. Preparation of poly[2-(4-hydroxy-benzylideneamine)-4-nitrophenol] polymeric indicator

At the beginning, the monomer was prepared. To 2,6 g (21.3 mmol) of 4-hydroxybenzaldehyde and 3.0 g (19.5 mmol) of 2-amino-4-nitrophenol 180 mL of toluene was added. The flask was fitted with a Soxhlet extractor filled with magnesium sulphate and refluxed for 24 hours with continuous stirring. A red precipitate formed during the reaction. Upon completion of the reflux, the resulting precipitate was filtered by Nutsche and washed with cold toluene. Upon cooling, additional precipitate formed from the mother liquor, which was also filtered off, and the mother liquor was concentrated on a rotary evaporator to give an orange crystalline material in the flask. All three crystalline fractions were dried under vacuum at 60 °C overnight. The fractions were analysed by ¹H-NMR, and we continued to work with the most suitable one for further synthesis.

The second step was the preparation of the polymer: the HBANP monomer was weighed on an analytical balance, then 30 ml of 1,4-dioxane was added with a measuring cylinder, followed by heating to 110 °C. 2.5 ml of 13% w/w sodium hypochlorite solution was added dropwise over 20 minutes, and the mixture was allowed to reflux for 2 hours. The product was precipitated in 250 ml of toluene. After 24 hours elapsed, the product was dried after decantation for 24 hours under vacuum at 80 °C.

### Example 4. Preparation of poly{4-[(3-nitrophenyl)diazenyl]phenol-formaldehyde} polymeric indicator

At the beginning, the monomer was prepared. 2.004 g of 3-nitroaniline was dissolved in 30 mL of 1 M HCl and 30 mL of water was added thereto and cooled to below 5 °C. Thereafter, 1.117 g of NaNO₂ was dissolved in 30 ml of water and added dropwise to the reaction mixture, and then a solution of 1.367 g of phenol in 15 ml of water was added dropwise to the reaction mixture, followed by stirring at room temperature for 12 hours. After 12 hours, it was vacuum filtered and the filtered precipitate was washed with a little cold water. The product is a yellow crystalline substance.

0.601 g of 4-((3-nitrophenyl)diazenyl)phenol and 0.119 g of paraformaldehyde were weighed into a 100 ml round bottom flask, then 2.36 ml of diethylene glycol dimethyl ether (diglym) was added and the reaction mixture was heated to 120 °C, then 0.208 mL of CH₃OK was added slowly and it was stirred at 120 °C for 24 hours. After stirring was stopped, the reaction mixture was added dropwise to 150 mL of 0.1 M HCl with stirring. The precipitated material was a dark brown precipitate. After precipitation, it was allowed to stand for 24 hours, then decanted after the 24 hours elapsed, and dried under vacuum at 80 °C for 24 hours.

### Example 5. Preparation of poly{4-[(4-nitrophenyl)diazenyl]phenol-formaldehyde} polymeric indicator

At the beginning, the monomer was prepared. To 20.00 g of 4-nitroaniline were added 300 ml of water and 300 ml of 1 M HCl solution, then the reaction mixture was cooled to below 5 °C. A solution of 10.0 g of NaNO₂ in 300 ml of water was added dropwise to the reaction mixture, taking care to keep the temperature below 10 °C. At the end of the addition, a solution of 15.0 g of phenol in 183 ml of water was slowly added to the reaction mixture. Thereafter, the reaction mixture was stirred at room temperature for 12 hours, then vacuum filtered the next day and the precipitate was washed with 100 ml of hot water. The product is a light brown crystalline substance.

The second step was the preparation of the polymer. 2,000 g of 4-[(4-nitrophenyl)diazenyl]phenol and 0.392 g of paraformaldehyde were weighed into a 100 ml round bottom flask. 7.8 mL of diglyme was added and the reaction mixture was heated to 120 °C, then a solution of 0.27 g of t-BuOK in 1 mL of methanol was added slowly and stirred at 120 °C for 24 h. After stirring was stopped, the reaction mixture was precipitated into 100 mL of 0.1 M HCl, while stirring. The product is a red solid. After precipitation, the mixture was allowed to stand for 24 hours and then, after the 24 hours elapsed, the solvent was decanted off and dried under vacuum at 80 °C for 24 hours.

### Example 6. Preparation of poly{4-[4-hydroxyphenyl)diazenyl]benzenesulphonic acid-formaldehyde} polymeric indicator

At the beginning, the monomer was prepared. 8.90 g of sulphanilic acid and 3.90 g of NaNO₂ were added to a 250 mL round bottom flask, then 20 mL of water was added and cooled to below 5 °C. 41 ml of 18% w/w hydrochloric acid were slowly added dropwise, followed by stirring for one hour. A solution of 8.47 g of phenol in 110 mL of 3 M NaOH was added dropwise, followed by stirring at room temperature for 12 hours. After 12 hours, the pH of the solution was adjusted to 2 by addition of cc. HCl, then the resulting precipitate was filtered off with suction and recrystallised from 160 ml of water. The product is an orange crystalline substance.

The second step was the preparation of the polymer. 1.004 g of 4-[(4-hydroxyphenyl)diazenyl]benzenesulphonic acid and 0.169 g of paraformaldehyde were weighed into a 100 ml round bottom flask, 3 ml of water was added and the reaction mixture was heated to 130 °C. When the reaction mixture reached 90 °C, 0.11 mL of 10 M NaOH solution was added slowly followed by stirring at 120 °C for 24 hours. After stirring was stopped, the reaction mixture was precipitated into 100 ml of tetrahydrofuran while stirring. The product is a red solid. After precipitation, the mixture was allowed to stand for 24 hours and then, after the 24 hours elapsed, the solvent was decanted off and dried under vacuum at 80 °C for 24 hours.

### Example 7. Preparation of poly(ethylene glycol)-isocyanate

Prior to synthesis, 5 g of PEG (Mₙ = 2000 g/mol) was dried in an oven at 60 °C under vacuum for two days and then dissolved in enough distilled toluene to give a 30-35% w/w solution, followed by the addition of 100 ml of toluene, which was distilled off from it to remove traces of water. The synthesis was performed in a 100 ml three-necked round bottom flask, heating and stirring were performed using a heated magnetic stirrer with aluminium heating medium. The inert gas introduction was started, then, after adding 10 ml distilled toluene and the appropriate amount of HDI, the heating was switched on, and at a temperature of about 100 °C, a solution of PEG in toluene was slowly added dropwise (so that all the material were added dropwise evenly over about 1.5 hours), while keeping the temperature at 100 °C. After the dropwise addition, the heating was turned off and the mixture was allowed to cool to room temperature. After about 45-60 minutes from switching off the heating, the cooled mixture was added dropwise to 8 to 10-fold amount of dry hexane, precipitating thereby the product, and it was allowed to stand in a refrigerator at 4 °C overnight. The next day, the liquid was decanted, followed by drying under a stream of inert gas for half an hour (to remove surface hexane). The precipitated product was dissolved in 10-15 ml of distilled toluene, then precipitated in 8 to 10-fold amount of dry hexane and allowed to stand again overnight in a refrigerator at 4 °C. The purified product was dried in an oven at room temperature under vacuum under strictly clean conditions (no water, alcohol, amine derivatives should be present). The product is white in colour, often waxy to the touch.

### Example 8. Preparation of a polymeric indicator fixed in a poly(ethylene glycol) carri er

To prepare a poly(4-nitrophenol-formaldehyde)/poly(ethylene glycol) gel, 291.2 mg of poly(4-nitrophenol-formaldehyde) polymeric indicator, dried under vacuum at 60 °C overnight, was dissolved in 536 µl of distilled (anhydrous) *N*,*N-*dimethylformamide to give a solution of about 36% by weight. After dissolution, triethylamine (TEA) catalyst was added to the polymeric indicator solution corresponding to 75% of its hydroxyl group content (222 µl). An amount of the poly(ethylene glycol)-isocyanate of Example 7 corresponding to 60% of the hydroxyl group content (1354 mg) was dissolved in 2.19 ml of distilled (anhydrous) *N,N*-dimethylformamide to give a 40% by weight solution. The solutions were pooled, homogenised, then heated at 80 °C for 48 hours. After cooling, the gel obtained was soaked in 300 ml of *N,N*-dimethylformamide, in 300 ml of a 1:3 by volume solvent mixture of water and *N,N*-dimethylformamide, in 300 ml of a 1:1 by volume solvent mixture of water and *N,N-*dimethylformamide, in 300 ml of a 3:1 by volume solvent mixture of water and *N*,*N-*dimethylformamide, and in water for 1-1 weeks to extract unreacted materials and catalyst (TEA) and to change the solvent, so that the gel did not crack. The gel fraction of the obtained hydrogel was 88%.

### Example 9. Preparation of a polymeric indicator fixed in a poly(ethylene glycol) carri er

To prepare a poly(4-nitrophenol-formaldehyde)/poly(ethylene glycol) gel, 899.9 mg of poly(4-nitrophenol-formaldehyde) polymeric indicator, dried under vacuum at 60 °C overnight, was dissolved in 1234 µl of distilled (anhydrous) dimethyl sulphoxide to give a solution of about 40% by weight. After dissolution, triethylenediamine (1,4-diazabicyclo[2.2.2]octane, DABCO) catalyst was added to the polymeric indicator solution corresponding to 75% of its hydroxyl group content (150.5 mg). An amount of the poly(ethylene glycol)-isocyanate of Example 7 corresponding to 60% of the hydroxyl group content (4179 mg) was dissolved in 5.69 ml of distilled (anhydrous) dimethyl sulphoxide to give a 40% by weight solution. The solutions were pooled, homogenised, then heated at 80 °C for 48 hours. After cooling, the gel obtained was soaked in 600 ml of *N,N-*dimethylformamide, in 600 ml of a 1:3 by volume solvent mixture of water and *N,N-*dimethylformamide, in 600 ml of a 1:1 by volume solvent mixture of water and *N,N-*dimethylformamide, in 600 ml of a 3:1 by volume solvent mixture of water and *N,N-*dimethylformamide, and in water for 1-1 weeks to extract unreacted materials and catalyst (DABCO) and to change the solvent, so that the gel did not crack.

### Example 10. Preparation of a polymeric indicator fixed in a poly(ethylene glycol) carrier, with cross-linking point density enhancer

To prepare a poly(4-nitrophenol-formaldehyde)/poly(ethylene glycol) gel, 150.2 mg of poly(4-nitrophenol-formaldehyde) polymeric indicator, dried under vacuum at 60 °C overnight, and 33.0 mg of D-sorbitol were dissolved in 291 µl of distilled (anhydrous) *N,N-*dimethylformamide to give a solution of about 40% by weight. After dissolution, triethylamine (TEA) catalyst was added to the polymeric indicator solution corresponding to 75% of its hydroxyl group content (236 µl). An amount of the poly(ethylene glycol)-isocyanate of Example 7 corresponding to 60% of the hydroxyl group content corresponding to the polymer indicator content corresponding to 100% (1392 mg) was dissolved in 2.25 ml of distilled (anhydrous) *N,N*-dimethylformamide to give a 40% by weight solution. The solutions were pooled, homogenised, then heated at 80 °C for 48 hours. After cooling, the gel obtained was soaked in 300 ml of *N*,*N*-dimethylformamide, in 300 ml of a 1:3 by volume solvent mixture of water and *N*,*N*-dimethylformamide, in 300 ml of a 1:1 by volume solvent mixture of water and *N*,*N*-dimethylformamide, in 300 ml of a 3:1 by volume solvent mixture of water and *N*,*N*-dimethylformamide, and in water for 1-1 weeks to extract unreacted materials and catalyst (TEA) and to change the solvent, so that the gel did not crack.

### Example 11. Preparation of a polymeric indicator fixed in a poly(ethylene glycol) carrier (comparative example)

To prepare a poly(4-nitrophenol-formaldehyde)/poly(ethylene glycol) gel, 302.3 mg of poly(4-nitrophenol-formaldehyde) polymeric indicator, dried under vacuum at 60 °C overnight, and 1201.2 mg of poly(ethylene glycol) were dissolved in 2.33 ml of distilled (anhydrous) *N*,*N*-dimethylformamide to give a solution of about 40% by weight based on the two polymers. After dissolution, triethylamine (TEA) catalyst was added to the polymeric indicator solution corresponding to 75% of its hydroxyl group content (209.2 µl), followed by an amount of 1,6-hexamethylene-diisocyanate corresponding to 60% of the hydroxyl group content corresponding to the polymeric indicator content corresponding to 100% (206.3 mg). After homogenisation, it was heated at 80 °C for 48 hours. After cooling, the gel obtained was soaked in 300 ml of *N*,*N*-dimethylformamide, in 300 ml of a 1:3 by volume solvent mixture of water and *N*,*N*-dimethylformamide, in 300 ml of a 1:1 by volume solvent mixture of water and *N,N-*dimethylformamide, in 300 ml of a 3:1 by volume solvent mixture of water and *N,N-*dimethylformamide, and in water for 1-1 weeks to extract unreacted materials and catalyst (TEA) and to change the solvent, so that the gel did not crack. The gel became cloudy, could not be transilluminated, crumbled.

### Example 12. Preparation of a polymeric indicator fixed in a poly(ethylene glycol) carri er

To prepare a poly(2-nitrophenol-formaldehyde)/poly(ethylene glycol) gel, 299.8 mg of poly(2-nitrophenol-formaldehyde) polymeric indicator, dried under vacuum at 60 °C overnight, was dissolved in 451 µl of distilled (anhydrous) *N,N-*dimethylformamide to give a solution of about 40% by weight. After dissolution, triethylamine (TEA) catalyst was added to the polymeric indicator solution corresponding to 75% of its hydroxyl group content (225 µl). An amount of the poly(ethylene glycol)-isocyanate of Example 7 corresponding to 60% of the hydroxyl group content (1395 mg) was dissolved in 2.22 ml of distilled (anhydrous) *N,N*-dimethylformamide to give a 40% by weight solution. The solutions were pooled, homogenised, then heated at 80 °C for 48 hours. After cooling, the gel obtained was soaked in 300 ml of *N,N*-dimethylformamide, in 300 ml of a 1:3 by volume solvent mixture of water and *N*,*N*-dimethylformamide, in 300 ml of a 1:1 by volume solvent mixture of water and *N,N*-dimethylformamide, in 300 ml of a 3:1 by volume solvent mixture of water and *N,N-*dimethylformamide, and in water for 1-1 weeks to extract unreacted materials and catalyst (TEA) and to change the solvent, so that the gel did not crack.

### Example 13. Preparation of a polymeric indicator fixed in a poly(ethylene glycol) carri er

To prepare a poly[2-(4-hydroxy-benzylideneamine)-4-nitrophenol)/poly(ethylene glycol) gel, 300 mg of poly[2-(4-hydroxy-benzylideneamine)-4-nitrophenol) polymeric indicator, dried under vacuum at 60 °C overnight, was dissolved in 450 µl of distilled (anhydrous) *N,N*-dimethylformamide to give a solution of about 40% by weight. After dissolution, triethylamine (TEA) catalyst was added to the polymeric indicator solution corresponding to 75% of its hydroxyl group content (245 µl). An amount of the poly(ethylene glycol)-isocyanate of Example 7 corresponding to 60% of the hydroxyl group content (1640 mg) was dissolved in 2.61 ml of distilled (anhydrous) *N,N-*dimethylformamide to give a 40% by weight solution. The solutions were pooled, homogenised, then heated at 80 °C for 48 hours. After cooling, the gel obtained was soaked in 300 ml of *N*,*N*-dimethylformamide, in 300 ml of a 1:3 by volume solvent mixture of water and *N*,*N*-dimethylformamide, in 300 ml of a 1:1 by volume solvent mixture of water and *N*,*N*-dimethylformamide, in 300 ml of a 3:1 by volume solvent mixture of water and *N*,*N*-dimethylformamide, and in water for 1-1 weeks to extract unreacted materials and catalyst (TEA) and to change the solvent, so that the gel did not crack.

### Example 14. Preparation of a polymeric indicator fixed in a poly(ethylene glycol) carri er

To prepare a poly{4-[(4-hydroxyphenyl)diazenyl]benzenesulphonic acid-formaldehyde}/poly(ethylene glycol) gel, 97.0 mg of poly{4-[(4-hydroxyphenyl)-diazenyl]benzenesulphonic acid-formaldehyde} polymeric indicator, dried under vacuum at 60 °C overnight, was dissolved in 560 µl of distilled (anhydrous) *N,N-*dimethylformamide to give a solution of about 15% by weight. After dissolution, triethylamine (TEA) catalyst was added to the polymeric indicator solution corresponding to 75% of its hydroxyl group content (43.7 µl). An amount of the poly(ethylene glycol)-isocyanate of Example 7 corresponding to 60% of the hydroxyl group content (321.9 mg) was dissolved in 478 µl of distilled (anhydrous) *N*,*N*-dimethylformamide to give a 40% by weight solution. The solutions were pooled, homogenised, then heated at 80 °C for 48 hours. After cooling, the gel obtained was soaked in 300 ml of *N*,*N*-dimethylformamide, in 300 ml of a 1:3 by volume solvent mixture of water and *N*,*N*-dimethylformamide, in 300 ml of a 1:1 by volume solvent mixture of water and *N*,*N*-dimethylformamide, in 300 ml of a 3:1 by volume solvent mixture of water and *N*,*N*-dimethylformamide, and in water for 1-1 weeks to extract unreacted materials and catalyst (TEA) and to change the solvent, so that the gel did not crack. The gel fraction of the obtained hydrogel was 94%.

### Example 15. Preparation of a polymeric indicator fixed in a poly(ethylene glycol) carri er

To prepare a poly{4-[(4-nitrophenyl)diazenyl]phenol}/poly(ethylene glycol) gel, 100 mg of poly{4-[(4-nitrophenyl)diazenyl]phenol} polymeric indicator, dried under vacuum at 60 °C overnight, was dissolved in 950 µl of distilled (anhydrous) *N,N-*dimethylformamide to give a solution of about 10% by weight. After dissolution, triethylamine (TEA) catalyst was added to the polymeric indicator solution corresponding to 75% of its hydroxyl group content (49 µl). An amount of the poly(ethylene glycol)-isocyanate of Example 7 corresponding to 80% of the hydroxyl group content (368 mg) was dissolved in 600 µl of distilled (anhydrous) *N*,*N*-dimethylformamide to give a 40% by weight solution. The solutions were pooled, homogenised, then heated at 80 °C for 48 hours. After cooling, the gel obtained was soaked in 300 ml of *N,N*-dimethylformamide, in 300 ml of a 1:3 by volume solvent mixture of water and *N,N*-dimethylformamide, in 300 ml of a 1:1 by volume solvent mixture of water and *N,N*-dimethylformamide, in 300 ml of a 3:1 by volume solvent mixture of water and *N,N-*dimethylformamide, and in water for 1-1 weeks to extract unreacted materials and catalyst (TEA) and to change the solvent, so that the gel did not crack.

### Example 16. Preparation of a polymeric indicator fixed in a hyperbranched polyglycidol carrier

To prepare a poly(4-nitrophenol-formaldehyde)/polyglycidol gel, 32.0 mg of poly(4-nitrophenol-formaldehyde) polymeric indicator, dried under vacuum at 60 °C overnight, and 310,4 mg of hyperbranched polyglycidol dried under vacuum at 60 °C overnight were dissolved in 544 µl of distilled (anhydrous) *N,N*-dimethylformamide to give a solution of about 40% by weight, based on the two polymers. After dissolution, triethylamine (TEA) catalyst was added to the polymeric indicator/polyglycidol solution, corresponding to 34% of its hydroxyl group content (10.0 µl), followed by an amount of 1,6-hexamethylene-diisocyanate (HDI) corresponding to 30% of the hydroxyl group content of polyglycidol (101 µl). After homogenisation, the solution was heated at 60 °C for 48 hours. After cooling, the obtained gel was soaked in 5x400 ml of *N*,*N*-dimethylformamide for 1-1 weeks to extract unreacted materials and catalyst (TEA).

### Example 17. Preparation of a polymeric indicator fixed in a hyperbranched polyglycidol carrier (comparative example)

To prepare a poly(4-nitrophenol-formaldehyde)/polyglycidol gel, 31.5 mg of poly(4-nitrophenol-formaldehyde) polymeric indicator, dried under vacuum at 60 °C overnight, and 309.7 mg of hyperbranched polyglycidol dried under vacuum at 60 °C overnight were dissolved in 542 µl of distilled (anhydrous) *N,N*-dimethylformamide to give a solution of about 40% by weight, based on the two polymers. After dissolution, triethylamine (TEA) catalyst was added to the polymeric indicator/polyglycidol solution, corresponding to 75% of its hydroxyl group content (21.8 µl), followed by an amount of 1,6-hexamethylene-diisocyanate (HDI) corresponding to 30% of the hydroxyl group content of polyglycidol (101 µl). After homogenisation, the solution was heated at 60 °C for 48 hours. After cooling, the obtained gel was soaked in 5x400 ml of *N*,*N*-dimethylformamide for 1-1 weeks to extract unreacted materials and catalyst (TEA). The obtained clear gel was cloudy and could not be transilluminated.

### Example 18. Preparation of a polymeric indicator fixed in a poly(ethylene glycol) carrier, with cross-linking point density enhancer

To prepare a poly(4-nitrophenol-formaldehyde)/poly(ethylene glycol) gel, 150.2 mg of poly(4-nitrophenol-formaldehyde) polymeric indicator, dried under vacuum at 60 °C overnight, and 33.0 mg of D-sorbitol were dissolved in 291 µl of distilled (anhydrous) *N,N-*dimethylformamide to give a solution of about 40% by weight. After dissolution, triethylamine (TEA) catalyst was added to the polymeric indicator solution corresponding to 75% of its hydroxyl group content (236 µl). An amount of the poly(ethylene glycol)-isocyanate of Example 7 corresponding to 60% of the hydroxyl group content corresponding to the polymer indicator content corresponding to 100% (1392 mg) was dissolved in 2.25 ml of distilled (anhydrous) *N,N*-dimethylformamide to give a 40% by weight solution. The solutions were pooled, homogenised, then heated at 80 °C for 48 hours. After cooling, the gel obtained was soaked in 300 ml of *N,N-*dimethylformamide, in 300 ml of a 1:3 by volume solvent mixture of water and *N,N*-dimethylformamide, in 300 ml of a 1:1 by volume solvent mixture of water and *N,N*-dimethylformamide, in 300 ml of a 3:1 by volume solvent mixture of water and *N*,*N*-dimethylformamide, and in water for 1-1 weeks to extract unreacted materials and catalyst (TEA) and to change the solvent, so that the gel did not crack.

### Example 19: Comparison of transmission changes of polymer gel samples with different initial light transmittances under pH change

The homogeneity of the polymer gel sample affects the absorption properties of the gel. Homogeneity can be indirectly characterised by measuring light transmittance at the lowest pH to be employed. For significantly different samples, these differences can also be seen visually: less light-transmitting samples show an opaque character, while those with better light transmittance are more transparent. The change in transmission of three different initial light transmittance gel samples was compared at 480 nm by placing the samples in buffers of different pH values. The examination was started with pH 1 buffer and the percentage of the intensity of the light transmitted by the gel relative to the illuminating light source was determined. Subsequently, with pH changes of 1 unit, this value was determined at all pH values up to pH 14. The intensity of the transmitted light was considered accepted for each measurement when the measured intensity value did not change further for at least 15 minutes. The more homogeneous the gel sample, the greater the change in transmission intensity for a pH 1 change, i.e., in the case of samples with a higher initial light transmittance the change is more easily detectable than in the case of those with a lower initial light transmittance.

The composition of the samples is as follows:
Sample 1: low initial light transmittance; composition: poly(p-nitrophenol-formaldehyde), 60% (functional group ratio of 0.6:1) PEG(2000)-isocyanate, 75% (functional group ratio of 0.75:1) TEA catalyst, 90% (functional group ratio of 9:1) ethylenediamine crosslinking density enhancing material.
Sample 2: medium initial light transmittance; composition: poly(p-nitrophenol-formaldehyde), 60% (functional group ratio of 0.6:1) PEG(2000)-isocyanate, 75% (functional group ratio of 0.75: 1) TEA catalyst.
Sample 3: high initial light transmittance; composition: poly(p-nitrophenol-formaldehyde), 80% (functional group ratio of 0.8:1) PEG(6000)-isocyanate, 75% (functional group ratio of 0.75:1) TEA catalyst.

The results are summarised in Table 1:

**Table 1**

| Comparison of light transmittance | | | |
|---|---|---|---|
| | **light transmittance (%)** | | |
| **pH** | **Sample 1** | **Sample 2** | **Sample 3** |
| 1 | 40 | 66 | 92 |
| 2 | 37 | 61 | 85 |
| 3 | 34 | 56 | 78 |
| 4 | 31 | 51 | 71 |
| 5 | 28 | 46 | 64 |
| 6 | 25 | 41 | 57 |
| 7 | 22 | 36 | 50 |
| 8 | 19 | 31 | 43 |
| 9 | 16 | 26 | 36 |
| 10 | 13 | 21 | 29 |
| 11 | 10 | 16 | 22 |
| 12 | 7 | 11 | 15 |
| 13 | 4 | 6 | 8 |
| 14 | 1 | 1 | 1 |

### Example 20. Preparation of a sensor comprising polymeric indicator fixed in a carri er

To prepare a sensor comprising a polymeric indicator with carrier, any of the polymeric indicator with carriers prepared according to Examples 8-10, 12-16 and 18 above are suitable. A broad-spectrum white LED (correlated colour temperature: 6200 K, wavelength range: 410-780 nm) light source was used as part of the sensor. The detector was an Ocean Optics STS-VIS spectrometer with a measurement wavelength range of 340-840 nm. During the construction of the sensor, the light source, the polymeric indicator, and the detector were arranged in this order along a straight line, in a fixed state, ensuring a constant light path. During the calibration of the detector, the intensity measured by the pure LED detector was recorded, and then the transmission intensity passing through the polymeric indicator was determined. Using the latter and the reference light intensity, the absorbance of the sample could be calculated according to Lambert-Beer's law for the given measurement wavelength. By calibrating the system in buffer solutions of known pH, it is suitable for pH measurement.

A sensor with similar operation can be created by replacing the broad-spectrum LED light source with a narrow-spectrum one in the same arrangement, the emission wavelength range of which falls within the maximum absorption range of the polymeric indicator. It is then sufficient to use a photodiode detector, a phototransistor or a photoresistor as a detector. These detectors are equally suitable for the preparation of the sensor; their replacement is not a new technical solution.

### Example 21. Measurement of pH using a sensor according to the invention (general method for measuring light absorption)

The sensor shown in Example 20 was used to measure pH. The reference spectrum of the light source was recorded and the polymeric indicator was placed in buffer solutions of known pH. After equilibrium was reached, the transmission spectrum of the indicator was measured, from which the absorption spectrum for the polymeric indicator at the given pH was determined using the Lambert-Beer law. Absorption spectra were recorded at pH values of 5, 6, 7, 8. We waited 3 hours between each measurement to ensure equilibrium was reached. The resulting series of measurements was repeated 5 times, and then the mean and standard deviation of the absorbance values measured at each pH were determined for the given wavelength (480 nm). The relationship between absorbance and pH was calculated using the Henderson-Hasselbalch equation. This function was fitted to the absorbance averages measured at different pH values, and by determining the fitting parameters and their relative error, we obtained a relation that can be used to determine the pH value from any absorbance value. The accuracy of the pH measurement was determined on the basis of Gaussian law of error propagation, which is a standard method in error calculation, with which we were able to determine the pH value with a value of uncertainty of 0.1 to 0.3 for different polymeric indicators. By optimizing the parameters of the indicator, the error of the pH measurement can be reduced below 0.1.

### Example 22. Preparation of a pH-measuring device comprising the polymeric indicator fixed in a carrier

The pH-measuring device comprises three printed circuit boards, one with an XPEBBL-L1-0000-00Y05 type LED light source (manufactured by Cree) and an NTC thermometer sensor, and the other with an OPT3002 optical sensor suitable for measuring absorption (manufactured by Microchip) and an NTC thermometer sensor. The third printed circuit board comprises an RS-485 communication element for their control and communication, an RJ-45 connector and an ATmega328P type microcontroller. Between the light source and the optical sensor used as a detector, the polymeric indicator fixed in a carrier is located in a support frame. The LED light source has a dominant wavelength between 470-480 nm and a luminous flux of 30.6 lm. Since the latter value also depends on the temperature, the thermometer sensors used are necessary to perform the subsequent temperature correction. Alternatively, an LED light source with a similar wavelength range and luminous intensity from another manufacturer may be used. The LED light source we use also includes a collimator lens to focus the light as accurately as possible. The spectral sensitivity of the detector used is 90% in the measurement range, which meets the requirements of the measurement task. The sensor that makes up the detector is a photodiode, an amplifier, an AD converter and an I²C interface in an integrated circuit. The microcontroller runs a program that implements the absorption measurement, which consists of the following steps:
1. LED turns on
2. Start OPT3002 sensor measurement
3. After 800 ms, the measurement stops
4. LED turns off
5. Data transmission via RS-485 interface
6. Repeat at time intervals according to choice

The data are processed (absorption calculation, temperature correction, pH calculation) on the receiving computer. Alternatively, the microcontroller can perform this calculation, but this leads to increased measurement time.

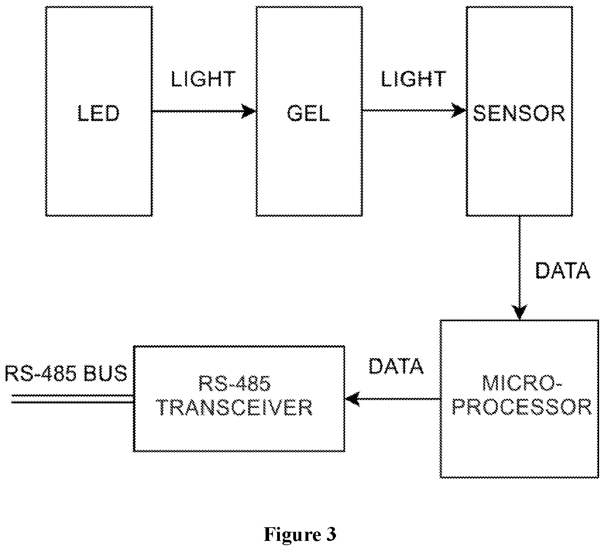

A block diagram showing the operation of the device according to the example is shown in Figure 3.

### Example 23. Comparison of a sensor according to the invention with a known sensor

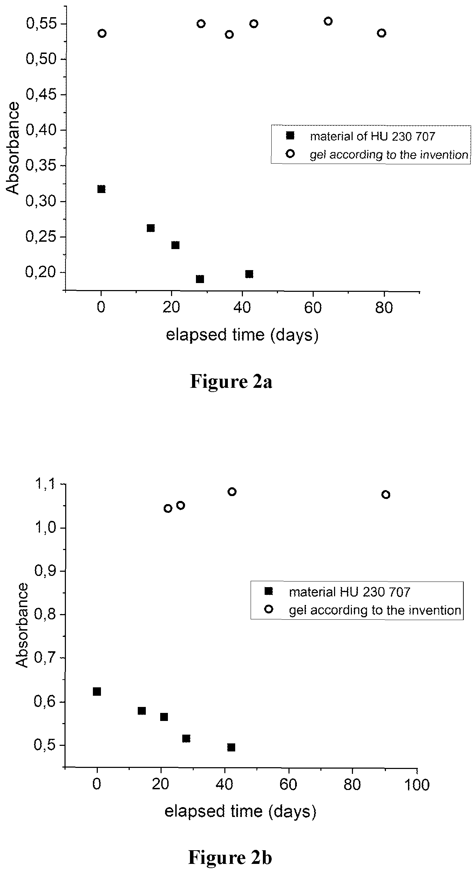

A sensor comprising a polymeric indicator [poly(4-nitrophenol formaldehyde)] according to WO 2016051217 (PIND sensor), wherein the polymeric indicator is fixed in poly(2-hydroxyethyl methacrylate) hydrophilic polymer by chemical bonds formed with triethoxyisocyanatopropylsilane, and a sensor comprising the same polymeric indicator in a poly(ethylene glycol) gel carrier according to the invention (PEG-PIND) were used to measure pH at pH 5, 6, 7 and 8 as described in Example 11 (day 0). The measurement was performed at the most preferred wavelength for the given indicator, which is 430 nm for the PIND sensor and 470 nm for the PEG-PIND sensor. The measurements were repeated after the given time in the same manner, without repeating the calibration, and the absorbance values obtained in each measurement were recorded in a buffer solution of known pH. The results obtained are shown in Tables 2 and 3 and on Figures 2a and 2b.

**Table 2**

| PIND sensor and PEG-PIND sensor control measurement at pH 5 | | |
|---|---|---|
| Elapsed time (days) | PIND | PEG-PIND |
| 0 | 0.3179 | 0.5369 |
| 14 | 0.2631 | - |
| 21 | 0.2386 | - |
| 22 | - | - |
| 26 | - | - |
| 28 | 0.1914 | 0.5510 |
| 36 | - | 0.5360 |
| 42 | 0.1985 | - |
| 43 | - | 0.5510 |
| 64 | - | 0.5552 |
| 90 | - | - |

**Table 3**

| PIND sensor and PEG-PIND sensor control measurement at pH 8 | | |
|---|---|---|
| Elapsed time (days) | PIND | PEG-PIND |
| 0 | 0.6232 | - |
| 14 | 0.5803 | - |
| 21 | 0.5659 | - |
| 22 | - | 1.0445 |
| 26 | - | 1.0524 |
| 28 | 0.5168 | - |
| 42 | 0.4962 | 1.0839 |
| 90 | - | 1.0783 |

During the control measurement of the sensor comprising the polymeric indicator according to WO 2016051217, a definite and continuous change in absorbance can be observed at pH 5, 6, 7 and 8 as well.

In contrast, a similar control measurement of a representative of the sensor according to the invention (PEG-based PIND gel containing 75% TEA based on the amount of OH groups of PIND) does not show such a change at a given wavelength, even if measurements are taken after a longer period of time. This is illustrated in Figures 2a and 2b at the minimum and maximum of the tested pH range (pH 5 and pH 8 medium).

This means that the sensor comprising the polymeric indicator fixed in a polymeric gel carrier can be used with one calibration at different pH values for a long period of time with an accuracy of 0.1-0.3 pH units for measuring pH.

## Claims

1. Polymeric pH-indicator fixed in a polymeric gel carrier, wherein the polymeric gel carrier comprises a given hydrophilic polymer, wherein a given polymeric indicator is cross-linked with said given hydrophilic polymer to form a combined cross-linked hydrogel network fixed by covalent bonds between the polymeric indicator and the hydrophilic polymer.

2. Polymeric indicator fixed in a polymeric gel carrier according to claim 1, wherein the polymeric indicator is a polymer having a general structure of formula (I), or a salt, hydrate or solvate thereof, 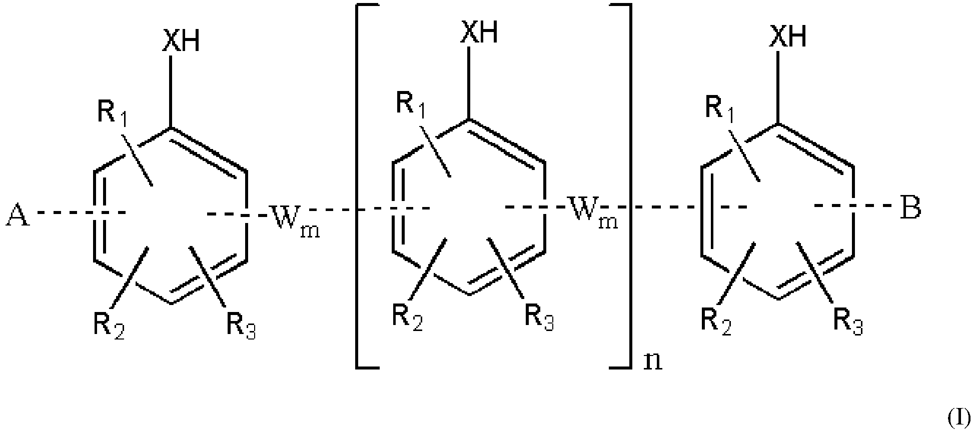 wherein
W is a bridging element connecting aromatic monomers, which may be a straight or branched alkanediyl group optionally containing one or two oxo groups;
m has a value of 0 to 6;
X is oxygen, sulphur or N-Q, wherein N is nitrogen, and Q is H or C₁-C₄ alkyl;
R₁, R₂ and R₃ are, independently of each other, selected from the group of H, NO₂, SO₂NH₂, CN, SF₅, halogen, phenyl, benzyl, C₁-C₄ alkyl, C₂-C₄ alkenyl, C₂-C₄ alkynyl, C₁-C₄ alkoxy, C₁-C₄ acyl, nitrophenyldiazenyl and sulphophenyl-diazenyl;
n has a value of 1 to 1000;
A and B are, independently of each other, selected from the group of H, CH₂OH, CH₂O-(C₁-C₄ alkyl), CH₂-halogen, W-OH, W-O-(C₁-C₄ alkyl) and W-halogen.

3. Polymeric indicator fixed in a polymeric gel carrier according to claim 2, wherein the bridging element W connecting aromatic monomers is CH₂ (methylene), CH₂-CH₂ (ethylene), CH₃-CH (methyl-methylene) or CO (carbonyl) group, the aromatic monomer is selected from the group of 4-nitrophenol, 4-nitro-thiophenol, 2-nitrophenol, 4-cyanophenol, 4-hydroxybenzenesulphonamide, 3,5-dimethyl-4-nitrophenol, 4-pentafluorothio-phenol, 2-(4-hydroxy-benzylideneamine)-4-nitrophenol, 4-[(3-nitrophenyl)diazenyl]phenol, 4-[(4-nitrophenyl)diazenyl]phenol and 4-[(4-hydroxyphenyl)-diazenyl]benzenesulphonic acid.

4. Polymeric indicator fixed in a polymeric gel carrier according to any of claims 2 to 3, wherein the bridging element W connecting aromatic monomers is CH₂ (methylene) or CH₃-CH (methyl-methylene) group, and the polymer comprises at least two different monomers.

5. Polymeric indicator fixed in a polymeric gel carrier according to claim 4, wherein the bridging element W connecting aromatic monomers is CH₂ (methylene) or CH₃-CH (methyl-methylene) group, and at least one of the monomers is selected from the group of 4-nitrophenol, 4-nitro-thiophenol, 2-nitrophenol, 4-cyanophenol, 4-hydroxybenzenesulphonamide, 3,5-dimethyl-4-nitrophenol, 4-pentafluorothio-phenol, 2-(4-hydroxy-benzylideneamine)-4-nitrophenol, 4-[(3-nitrophenyl)diazenyl]phenol, 4-[(4-nitrophenyl)diazenyl]phenol and [(4-hydroxyphenyl)diazenyl]benzenesulphonic acid.

6. Polymeric indicator fixed in a polymeric gel carrier according to claim 4, wherein the bridging element W connecting aromatic monomers is CH₂ (methylene) or CH₃-CH (methyl-methylene) group, and at least one of the monomers is 4-nitrophenol.

7. Polymeric indicator fixed in a polymeric gel carrier according to any of claims 2 to 6, wherein m has a value of 0 to 5.

8. Polymeric indicator fixed in a polymeric gel carrier according to any of claims 1 to 7, wherein the polymeric indicator is selected from the group of poly(4-nitrophenol-formaldehyde), poly(2-nitrophenol-formaldehyde), poly(4-nitrophenol-co-4-cyano-phenol-formaldehyde), poly(4-nitrophenol-co-4-hydroxybenzenesulphonamide-formaldehyde), poly(3,5-dimethyl-4-nitrophenol-formaldehyde), poly[2-(4-hydroxybenzylideneamine)-4-nitrophenol], poly{4-[(3-nitrophenyl)diazenyl]phenol}, poly{4-[(3-nitrophenyl)diazenyl]phenol-formaldehyde}, poly{4-[(4-nitrophenyl)diazenyl]phenol}, poly{4-[(4-nitrophenyl)diazenyl]phenol-formaldehyde}, poly{4-[(4-hydroxyphenyl)-diazenyl]benzenesulphonic acid}, poly { 4-[(4-hydroxyphenyl)diazenyl]benzenesulphonic acid-formaldehyde}.

9. Polymeric indicator fixed in a polymeric gel carrier according to any of claims 1 to 8, wherein the polymeric gel carrier is selected from the group of polyglycidols, hyperbranched polyglycidol or linear polyglycidol, poly(ethylene glycol) and derivatives of poly(ethylene glycol), poly(vinyl alcohol), poly(*N*-vinylpyrrolidone), poly(*N*-vinylimidazole), poly(acrylamide) and derivatives of poly(acrylamide), poly(hydroxyethyl acrylamide), poly(acrylic acid) and derivatives of poly(acrylic acid), poly(hydroxyethyl acrylate), poly(methacrylic acid) and derivatives of poly(methacrylic acid), poly(hydroxyethyl methacrylate), linear poly(ethyleneimine) or hyperbranched poly(ethyleneimine), poly(methyl vinyl ether), poly(methyl oxazoline), poly(ethyl oxazoline) and poly(isopropyl oxazoline), and their derivatives with isocyanates.

10. Polymeric indicator fixed in a polymeric gel carrier according to any of claims 1 to 9, wherein the amount of the polymeric indicator is 0.01 to 2 times the weight of the polymeric carrier.

11. Process for the preparation of the polymeric indicator fixed in a polymeric gel carrier according to any of claims 1 to 10, comprising the steps of: dissolving the polymeric gel carrier and the polymeric indicator independently of each other in a suitable solvent; combining the solutions, and, in the presence of a coupling agent, forming the combined cross-linked hydrogel network.

12. Process for the preparation of the polymeric indicator fixed in a polymeric gel carrier according to any of claims 1 to 10, comprising the steps of: dissolving an isocyanate derivative of the polymeric gel carrier and the polymeric indicator independently of each other in a suitable solvent; combining the solutions, and forming the combined cross-linked hydrogel network.

13. Sensor for measuring pH, comprising the polymeric indicator fixed in a polymeric gel carrier according to any of claims 1 to 10.

14. Use of a sensor according to claim 13 for measuring pH.

## Patentansprüche

1. Polymerer pH-Indikator, der in einem Polymergelträger fixiert ist, wobei der Polymergelträger ein gegebenes hydrophiles Polymer umfasst, wobei ein gegebener Polymerindikator mit dem gegebenen hydrophilen Polymer vernetzt ist, um ein kombiniertes vernetztes Hydrogelnetz(werk) zu bilden, das durch kovalente Bindungen zwischen dem Polymerindikator und dem hydrophilen Polymer fixiert ist.

2. In einem Polymergelträger fixierter Polymerindikator gemäß Anspruch 1, wobei der Polymerindikator ein Polymer der allgemeinen Formel (I) oder ein Salz, Hydrat oder Solvat davon ist, 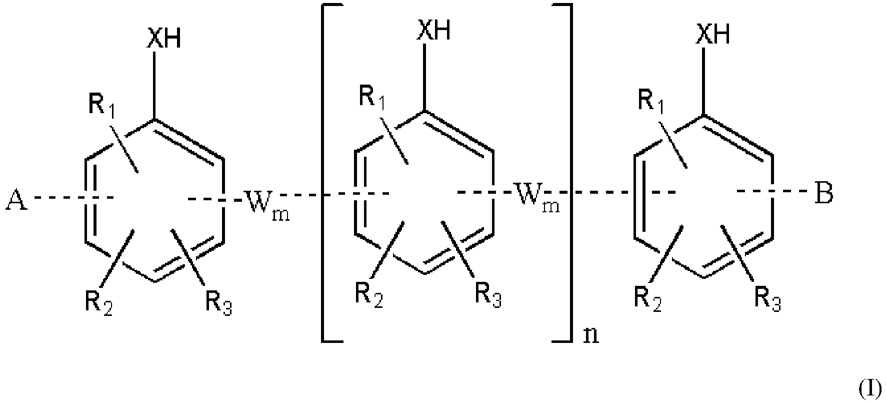 worin
W ein Brückenelement ist, das aromatische Monomere verbindet, und das eine gerade oder verzweigte Alkandiylgruppe sein kann, die gegebenenfalls eine oder zwei Oxogruppen enthält;
m ein Wert von 0 bis 6 ist;
X für Sauerstoff, Schwefel oder N-Q steht, wobei N für Stickstoff und Q für H oder C₁-C₄-Alkyl steht;
R₁, R₂ und R₃ unabhängig voneinander ausgewählt sind aus der Gruppe von H, NO₂, SO₂NH₂, CN, SF₅, Halogen, Phenyl, Benzyl, C₁-C₄-Alkyl, C₂-C₄-Alkenyl, C₂-C₄-Alkinyl, C₁-C₄-Alkoxy, C₁-C₄-Acyl, Nitrophenyldiazenyl und Sulphophenyl-diazenyl;
n einen Wert von 1 bis 1000 aufweist;
A und B unabhängig voneinander ausgewählt sind aus der Gruppe von H, CH₂OH, CH₂O-(C₁-C₄-Alkyl), CH₂-Halogen, W-OH, W-O-(C₁-C₄-Alkyl) und W-Halogen.

3. In einem Polymergelträger fixierter Polymerindikator nach Anspruch 2, wobei das Brückenelement W, das aromatische Monomere verbindet, eine CH₂- (Methylen-), CH₂-CH₂-(Ethylen-), CH₃-CH- (Methyl-methylen-) oder CO- (Carbonyl-) Gruppe ist, das aromatische Monomer ausgewählt ist aus der Gruppe von 4-Nitrophenol, 4-Nitro-thiophenol, 2-Nitrophenol, 4-Cyanophenol, 4-Hydroxybenzolsulfonamid, 3,5-Dimethyl-4-nitrophenol, 4-Pentafluorthio-phenol, 2-(4-Hydroxy-benzylidenamin)-4-nitrophenol, 4-[(3-Nitrophenyl)diazenyl]phenol, 4-[(4-Nitrophenyl)diazenyl]phenol und 4-[(4-Hydroxyphenyl)diazenyl]benzolsulfonsäure.

4. In einem Polymergelträger fixierter Polymerindikator nach einem der Ansprüche 2 bis 3, wobei das Brückenelement W, das aromatische Monomere verbindet, eine CH₂-(Methylen-) oder CH₃-CH- (Methyl-methylen-) Gruppe ist, und das Polymer mindestens zwei verschiedene Monomere umfasst.

5. In einem Polymergelträger fixierter Polymerindikator nach Anspruch 4, wobei das Brückenelement W, das aromatische Monomere verbindet, eine CH₂- (Methylen-) oder CH₃-CH- (Methyl-methylen-) Gruppe ist, und mindestens eines der Monomere ausgewählt aus der Gruppe von 4-Nitrophenol, 4-Nitro-thiophenol, 2-Nitrophenol, 4-Cyanophenol, 4-Hydroxybenzolsulfonamid, 3,5-Dimethyl-4-nitrophenol, 4-Pentafluorthiophenol, 2-(4-Hydroxy-benzylidenamin)-4-nitrophenol, 4-[(3-Nitrophenyl)diazenyl]phenol, 4-[(4-Nitrophenyl)diazenyl]phenol und [(4-Hydroxyphenyl)diazenyl]benzolsulfonsäure.

6. In einem Polymergelträger fixierter Polymerindikator nach Anspruch 4, wobei das Brückenelement W, das aromatische Monomere verbindet, eine CH₂- (Methylen-) oder CH₃-CH- (Methyl-methylen-) Gruppe ist, und mindestens eines der Monomere 4-Nitrophenol ist.

7. In einem Polymergelträger fixierter Polymerindikator nach einem der Ansprüche 2 bis 6, wobei m einen Wert von 0 bis 5 aufweist.

8. In einem Polymergelträger fixierter Polymerindikator nach einem der Ansprüche 1 bis 7, wobei der Polymerindikator ausgewählt ist aus der Gruppe von Poly(4-nitrophenol-formaldehyd), Poly(2-nitrophenol-formaldehyd), Poly(4-Nitrophenol-co-4-cyanophenol-formaldehyd), Poly(4-nitrophenol-co-4-hydroxybenzolsulfonamid-formaldehyd), Poly(3,5-dimethyl-4-nitrophenol-formaldehyd), Poly[2-(4-hydroxybenzylidenamin)-4-nitrophenol], Poly {4- [(3-nitrophenyl)diazenyl]phenol}, Poly{4-[(3-nitrophenyl)-diazenyl]phenol-formaldehyd}, Poly{4-[(4-Nitrophenyl)diazenyl]phenol}, Poly {4-[(4-nitrophenyl)diazenyl]phenol-formaldehyd}, Poly{4-[(4-hydroxyphenyl)diazenyl]benzolsulfonsäure}, Poly{4-[(4- hydroxyphenyl)diazenyl]benzolsulfonsäure-formaldehyd}.

9. In einem Polymergelträger fixierter Polymerindikator nach einem der Ansprüche 1 bis 8, wobei der Polymergelträger ausgewählt ist aus der Gruppe von Polyglycidolen, hyperverzweigtem Polyglycidol oder linearem Polyglycidol, Poly(ethylenglycol) und Derivaten von Poly(ethylenglycol), Poly(vinylalkohol), Poly(N-vinylpyrrolidon), Poly(*N-*vinylimidazol), Poly(acrylamid) und Derivaten von Poly(acrylamid), Poly(hydroxyethylacrylamid), Poly(acrylsäure) und Derivaten von Poly(acrylsäure), Poly(hydroxyethylacrylat), Poly(methacrylsäure) und Derivaten von Poly(methacrylsäure), Poly(hydroxyethylmethacrylat), linearem Poly(ethylenimin) oder hyperverzweigtem Poly(ethylenimin), Poly(methylvinylether), Poly(methyloxazolin), Poly(ethyloxazolin) und Poly(isopropyloxazolin) und deren Derivaten mit Isocyanaten.

10. In einem Polymergelträger fixierter Polymerindikator nach einem der Ansprüche 1 bis 9, wobei die Menge des Polymerindikators das 0,01- bis 2-Fache des Gewichtes des Polymergelträgers beträgt.

11. Verfahren zur Herstellung des in einem Polymergelträger fixierten Polymerindikators nach einem der Ansprüche 1 bis 10, umfassend die folgenden Schritte: Lösen des Polymergelträgers und des Polymerindikators unabhängig voneinander in einem geeigneten Lösungsmittel; Kombinieren der Lösungen und, in Gegenwart eines Kopplungsmittels, Bilden des kombinierten vernetzten Hydrogelnetzwerks.

12. Verfahren zur Herstellung des in einem Polymergelträger fixierten Polymerindikators nach einem der Ansprüche 1 bis 10, umfassend die folgenden Schritte: Lösen eines Isocyanatderivats des Polymergelträgers und des Polymerindikators unabhängig voneinander in einem geeigneten Lösungsmittel; Kombinieren der Lösungen und Bilden des kombinierten vernetzten Hydrogelnetzwerks.

13. Sensor zur pH-Messung, umfassend den in einem Polymergelträger fixierten Polymerindikator nach einem der Ansprüche 1 bis 10.

14. Verwendung eines Sensors nach Anspruch 13 zur pH-Messung.

## Revendications

1. Indicateur de pH polymérique fixé dans un support de gel polymérique, dans lequel le support de gel polymérique comprend un polymère hydrophile donné, dans lequel un indicateur polymérique donné est réticulé avec ledit polymère hydrophile donné pour former un réseau d'hydrogel réticulé combiné fixé par des liaisons covalentes entre l'indicateur polymérique et le polymère hydrophile.

2. Indicateur polymérique fixé dans un support de gel polymérique selon la revendication 1, dans lequel l'indicateur polymérique est un polymère ayant une structure générale de formule (I), ou un sel, un hydrate ou un solvate de celui-ci, 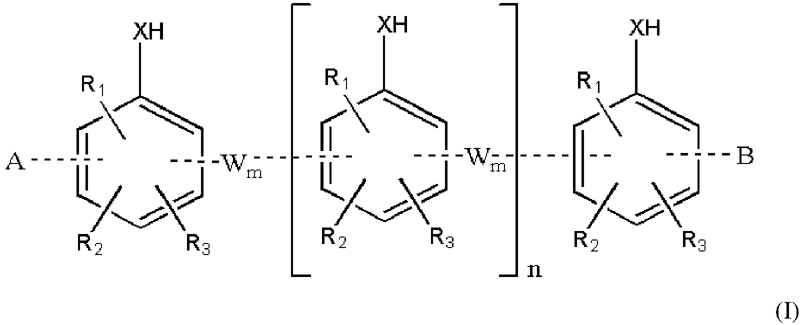 dans laquelle
W est un élément de pontage reliant des monomères aromatiques, qui peut être un groupe alcanediyle linéaire ou ramifié contenant éventuellement un ou deux groupes oxo ;
m a une valeur de 0 à 6 ;
X est l'oxygène, le soufre ou N-Q, dans lequel N est l'azote, et Q est H ou un alkyle en C₁-C₄ ;
R₁, R₂ et R₃ sont, indépendamment l'un de l'autre, choisis dans le groupe constitué par H, NO₂, SO₂NH₂, CN, SF₅, halogène, phényle, benzyle, alkyle en C₁-C₄, alcényle en C₂-C₄, alcynyle en C₂-C₄, alcoxy en C₁-C₄, acyle en C₁-C₄, nitrophényldiazényle et sulfophényl-diazényle ;
n a une valeur de 1 à 1000 ;
A et B sont, indépendamment l'un de l'autre, choisis dans le groupe constitué par H, CH₂OH, CH₂O-(alkyle en C₁-C₄), CH₂-halogène, W-OH, W-O-(alkyle en C₁-C₄) et W-halogène.

3. Indicateur polymérique fixé dans un support de gel polymérique selon la revendication 2, dans lequel l'élément de pontage W reliant les monomères aromatiques est un groupe CH₂ (méthylène), CH₂-CH₂ (éthylène), CH₃-CH (méthyl-méthylène) ou CO (carbonyle), le monomère aromatique est choisi dans le groupe constitué par 4-nitrophénol, 4-nitro-thiophénol, 2-nitrophénol, 4-cyanophénol, 4-hydroxybenzènesulfonamide, 3,5-diméthyl-4-nitrophénol, 4-pentafluorothio-phénol, 2-(4-hydroxy-benzylidèneamine)-4-nitrophénol, 4-[(3-nitrophényl)diazényl]phénol, 4-[(4-nitrophényl)diazényl]phénol et l'acide 4-[(4-hydroxyphényl)-diazényl]benzènesulfonique.

4. Indicateur polymérique fixé dans un support de gel polymérique selon l'une quelconque des revendications 2 à 3, dans lequel l'élément de pontage W reliant les monomères aromatiques est un groupe CH₂ (méthylène) ou CH₃-CH (méthyl-méthylène), et le polymère comprend au moins deux monomères différents.

5. Indicateur polymérique fixé dans un support de gel polymérique selon la revendication 4, dans lequel l'élément de pontage W reliant les monomères aromatiques est un groupe CH₂ (méthylène) ou CH₃-CH (méthyl-méthylène), et au moins un des monomères est choisi dans le groupe constitué par 4-nitrophénol, 4-nitro-thiophénol, 2-nitrophénol, 4-cyanophénol, 4-hydroxybenzènesulfonamide, 3,5-diméthyl-4-nitrophénol, 4-pentafluorothio-phénol, 2-(4-hydroxy-benzylidèneamine)-4-nitrophénol, 4-[(3-nitrophényl)diazényl]phénol, 4-[(4-nitrophényl)diazényl]phénol et l'acide [(4-hydroxyphényl)diazényl]benzènesulfonique.

6. Indicateur polymérique fixé dans un support de gel polymérique selon la revendication 4, dans lequel l'élément de pontage W reliant les monomères aromatiques est un groupe CH₂ (méthylène) ou CH₃-CH (méthyl-méthylène), et au moins un des monomères est le 4-nitrophénol.

7. Indicateur polymérique fixé dans un support de gel polymérique selon l'une quelconque des revendications 2 à 6, dans lequel m a une valeur de 0 à 5.

8. Indicateur polymérique fixé dans un support de gel polymérique selon l'une quelconque des revendications 1 à 7, dans lequel l'indicateur polymérique est choisi dans le groupe constitué par poly(4-nitrophénol-formaldéhyde), poly(2-nitrophénol-formaldéhyde), poly(4-nitrophénol-co-4-cyano-phénol-formaldéhyde), poly(4-nitrophénol-co-4-hydroxybenzènesulfonamide-formaldéhyde), poly(3,5-diméthyl-4-nitrophénol-formaldéhyde), poly[2-(4-hydroxybenzylidène-amine)-4-nitrophénol], poly { 4-[(3-nitrophényl)diazényl]phénol}, poly{4-[(3-nitrophényl)-diazényl]phénol-formaldéhyde}, poly { 4-[(4-nitrophényl)diazényl]phénol}, poly{4-[(4-nitrophényl)diazényl]phénol-formaldéhyde}, poly{acide 4-[(4-hydroxyphényl)-diazényl]-benzènesulfonique}, poly { acide 4-[(4-hydroxyphényl)diazényl]benzènesulfonique-formaldéhyde}.

9. Indicateur polymérique fixé dans un support de gel polymérique selon l'une quelconque des revendications 1 à 8, dans lequel le support de gel polymérique est choisi dans le groupe constitué par polyglycidols, polyglycidol hyperbranché ou polyglycidol linéaire, poly(éthylène glycol) et dérivés de poly(éthylène glycol), poly(alcool vinylique), poly(N-vinylpyrrolidone), poly(N-vinylimidazole), poly(acrylamide) et dérivés de poly(acrylamide), poly(acrylamide hydroxyéthylique), poly(acide acrylique) et dérivés de poly(acide acrylique), poly(acrylate d'hydroxyéthyle), poly(acide méthacrylique) et dérivés de poly(acide méthacrylique), poly(méthacrylate d'hydroxyéthyle), poly(éthylèneimine) linéaire ou poly(éthylèneimine) hyperbranché, poly(méthyl vinyl éther), poly(méthyl-oxazoline), poly(éthyl-oxazoline) et poly(isopropyl-oxazoline), et leurs dérivés avec des isocyanates.

10. Indicateur polymérique fixé dans un support de gel polymérique selon l'une quelconque des revendications 1 à 9, dans lequel la quantité d'indicateur polymérique est de 0,01 à 2 fois le poids du support polymérique.

11. Procédé de préparation de l'indicateur polymérique fixé dans un support de gel polymérique selon l'une quelconque des revendications 1 à 10, comprenant les étapes consistant à : dissoudre le support de gel polymérique et l'indicateur polymérique indépendamment l'un de l'autre dans un solvant approprié ; combiner les solutions et, en présence d'un agent de couplage, former le réseau d'hydrogel réticulé combiné.

12. Procédé de préparation de l'indicateur polymérique fixé dans un support de gel polymérique selon l'une quelconque des revendications 1 à 10, comprenant les étapes consistant à : dissoudre un dérivé isocyanate du support de gel polymérique et l'indicateur polymérique indépendamment l'un de l'autre dans un solvant approprié ; combiner les solutions et former le réseau d'hydrogel réticulé combiné.

13. Capteur pour mesurer le pH, comprenant l'indicateur polymérique fixé dans un support de gel polymérique selon l'une des revendications 1 à 10.

14. Utilisation d'un capteur selon la revendication 13 pour mesurer le pH.
